(19) 

**Europäisches Patentamt**
**European Patent Office**
**Office européen des brevets**

(11) **EP 1 843 284 A1**

(12) **EUROPEAN PATENT APPLICATION**

(43) Date of publication:
**10.10.2007 Bulletin 2007/41**

(51) Int Cl.:
**G06N 5/04** *(2006.01)*

(21) Application number: **06251890.7**

(22) Date of filing: **03.04.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (72) Inventor: **The designation of the inventor has not yet been filed** |
| (71) Applicant: **BRITISH TELECOMMUNICATIONS public limited company**<br>**London EC1A 7AJ (GB)** | (74) Representative: **Williamson, Simeon Paul et al**<br>**BT Group Legal**<br>**Intellectual Property Department**<br>**PP C5A**<br>**BT Centre**<br>**81 Newgate Street**<br>**London EC1A 7AJ (GB)** |

(54) **Conflict handler**

(57)    A conflict handler (36) and process for selecting non-conflicting objects; comprising: (i) building an ordered list of conflict precedences; (ii) assigning the next object on the ordered list as a current object; (iii) identifying any conflict pairs containing the current object; (iv) determining whether any objects in the identified conflicting pairs have already been selected as one of the plurality of non-conflicting objects; (v-a) if no, adding the current object to the plurality of non-conflicting objects; or if yes, not adding the current object to the plurality of non-conflicting objects; (vi) repeating steps (ii) to (v) until all the objects have been processed; and (vii) adding objects not included in the ordered list to the plurality of non-conflicting objects; thereby providing the final plurality of non-conflicting objects. Objects may be on a final non-conflicting objects list despite losing out to one or more other objects in one-to-one conflict pairs.

START

BUILD ORDERED LIST OF CONFLICT PRECEDENCES — s40

ADD ANY SERVICE(S) NOT ON THE ORDERED LIST TO A LIST OF NON-CONFLICTING SERVICES — s44

ASSIGN NEXT SERVICE ON ORDERED LIST AS CURRENT SERVICE — s48

IDENTIFY THOSE CONFLICT PAIR(S) THAT CONTAIN THE CURRENT SERVICE — s52

DO ANY OF THE SERVICES IN THE IDENTIFIED CONFLICTING PAIRS ALREADY APPEAR ON THE NON-CONFLICTING SERVICES LIST? — s56

NO → ADD CURRENT SERVICE TO NON-CONFLICTING SERVICES LIST — s60

YES → DO **NOT** ADD CURRENT SERVICE TO NON-CONFLICTING SERVICES LIST — s64

IS CURRENT SERVICE THE LAST SERVICE ON THE ORDERED LIST? — s68

NO

YES → END

FIG. 12

EP 1 843 284 A1

**Description**

The present invention relates to conflict handling, in particular conflict handling of plural objects where some of the objects are mutually exclusive in a pair-wise manner where one object in a pair of mutually exclusive objects has precedence over the other object in the mutually exclusive pair of objects. The present invention may in particular be employed in, but is not limited to, a network services broker for brokering plural communications services that may be provided to a user through a network.

In conventional network services brokering, deciding which service or services to invoke in response to different triggering events is typically based on fixed pre-assigned precedence values. Such an arrangement is employed, for example, for Voice over Internet Protocol (VoIP) type services provided through a network, for example the Internet.

Conventional network service brokering arrangements typically use fixed application logic and are controlled by a service provider.

Conventional rule engines operate in either a forward or a backward chaining manner. Forward chaining starts with given facts and uses rules to reach one or more goals. Backward chaining starts with all potential goals and works backwards to determine which goals would be reached given certain facts.

Generally, a large number of processes or entities, for example an inferencing mechanism, expert system, etc, may produce a set of objects, some of which might be mutually exclusive i.e. objects which may not be used simultaneously. Mutual exclusion between objects is defined as a "pair-wise" relationship between two objects such that one object is declared as taking precedence over the other.

Some rule engines attempt to deal with conflicting rules through use of Courteous Logic Programming (CLP). CLP is an extension of logic programming which allows negation to both the head and body of a rule. However, this implies that logical conflicts can arise, so CLP uses prioritisation between rules to resolve such conflicts and introduces mutual exclusion between rule predicates. IBM (trademark) Common Rules Engine uses a form of CLP called Situated CLP. Generally, conventional conflict resolving processes for conflicts defined using pair-wise relationships adopt a singleton result approach based on rule identification labels, i.e. only one winning rule is determined for a given set of circumstances.

Markup languages, such as Extensible Markup Language (XML) and Hypertext Markup Language (HTML) are known. For example, XML provides a text-based means to describe and apply a structure to information/data.

In a first aspect, the present invention provides a conflict handler for selecting a plurality of non-conflicting objects from a plurality of objects at least some of which define conflict-pairs of mutually exclusive objects wherein for each conflict pair one of the objects in the pair takes precedence over the other object of the pair; the conflict handler comprising means for performing the following steps: (i) building an ordered list of conflict precedences comprising at least those objects that occur in one or more conflict pairs, wherein the ordered list of conflict precedences lists all the objects in the ordered list in a precedence order that is internally consistent with the precedence relationships within the conflict pairs; the means being arranged to perform the following steps (ii) to (vi) in the following order: (ii) assigning the next object on the ordered list as a current object; (iii) identifying any conflict pair or pairs that contain the current object; (iv) determining whether any of the objects in the identified conflicting pairs have already been selected as one of the plurality of non-conflicting objects; (v-a) if the result of the determining step (iv) is that none of the objects in the identified conflicting pairs have already been selected as one of the plurality of non-conflicting objects or if at step (iii) no conflict pairs containing the current object were identified, then adding the current object to the plurality of non-conflicting objects; or (v-b) whereas if the result of the determining step (iv) is that one or more of the objects in the identified conflicting pairs have already been selected as one of the plurality of non-conflicting objects, then not adding the current object to the plurality of non-conflicting objects; (vi) repeating steps (ii) to (v) until all the objects have been processed in turn as a respective current object; and (vii) adding any of the plurality of objects that were not included in the ordered list to the plurality of non-conflicting objects; wherein the resulting plurality of non-conflicting objects is the selected plurality of non-conflicting objects.

The means for selecting a plurality of non-conflicting objects may be arranged to perform step (vii) before step (i).

The means for selecting a plurality of non-conflicting objects may be arranged to perform step (vii) after step (i) and before steps (ii) to (vi).

The means for selecting a plurality of non-conflicting objects may be arranged such that at step (i) all the objects of the plurality of objects are added to the ordered list, and thereby no objects need to be added at step (vii) which is therefore not implemented.

The means for selecting a plurality of non-conflicting objects may be arranged such that step (iv) is performed by performing the following steps: (iv-a) reducing the identified conflict pairs to one or more non-mutually-exclusive conflict-winning objects; and (iv-b) determining whether any of the non-mutually-exclusive conflict-winning objects have already been selected as one of the plurality of non-conflicting objects.

The conflict handler may comprise a mark-up language query processor for querying the objects stored in a mark-up language document or database.

The mark-up language may be Extensible Markup Language, XML, and the mark-up language query processor may be an XQuery processor.

The objects may be communications services. The communications services may be brokered in a network services broker.

In a further aspect, the present invention provides a conflict handling method for selecting a plurality of non-conflicting objects from a plurality of objects at least some of which define conflict-pairs of mutually exclusive objects wherein for each conflict pair one of the objects in the pair takes precedence over the other object of the pair; the method comprising the following steps: (i) building an ordered list of conflict precedences comprising at least those objects that occur in one or more conflict pairs, wherein the ordered list of conflict precedences lists all the objects in the ordered list in a precedence order that is internally consistent with the precedence relationships within the conflict pairs; performing the following steps (ii) to (vi) in the following order: (ii) assigning the next object on the ordered list as a current object; (iii) identifying any conflict pair or pairs that contain the current object; (iv) determining whether any of the objects in the identified conflicting pairs have already been selected as one of the plurality of non-conflicting objects; (v-a) if the result of the determining step (iv) is that none of the objects in the identified conflicting pairs have already been selected as one of the plurality of non-conflicting objects or if at step (iii) no conflict pairs containing the current object were identified, then adding the current object to the plurality of non-conflicting objects; or (v-b) whereas if the result of the determining step (iv) is that one or more of the objects in the identified conflicting pairs have already been selected as one of the plurality of non-conflicting objects, then not adding the current object to the plurality of non-conflicting objects; (vi) repeating steps (ii) to (v) until all the objects have been processed in turn as a respective current object; and (vii) adding any of the plurality of objects that were not included in the ordered list to the plurality of non-conflicting objects; wherein the resulting plurality of non-conflicting objects is the selected plurality of non-conflicting objects.

Step (vii) may be performed before step (i).

Step (vii) may be performed after step (i) and before steps (ii) to (vi).

The method may be performed such that at step (i) all the objects of the plurality of objects are added to the ordered list, and thereby no objects need to be added at step (vii) which is therefore not implemented.

Step (iv) may be performed by performing the following steps: (iv-a) reducing the identified conflict pairs to one or more non-mutually-exclusive conflict-winning objects; and (iv-b) determining whether any of the non-mutually-exclusive conflict-winning objects have already been selected as one of the plurality of non-conflicting objects.

The method may further comprise using a mark-up language query processor for querying the objects stored in a mark-up language document or database.

The mark-up language may be Extensible Markup Language, XML, and the mark-up language query processor is an XQuery processor.

The objects may be communications services. The communications services may be brokered in a network services broker.

In further aspects, the present invention provides a storage medium storing processor-implementable instructions for controlling one or more processors to carry out the method or implement the systems or apparatus of any of the above aspects.

The present invention advantageously allows the possibility for one or more services to be on the final non-conflicting services list despite losing out to one or more other services in one-to-one conflict pairs. This advantageous outcome for one or more services to potentially be on the final non-conflicting services list despite losing out to one or more other services in the one-to-one conflict pairs contrasts with conventional rule engines and rule engine processes, in which typically no losing object of any conflict pair is present in a final list of non-conflicting items derived from processing plural conflict pairs.

Embodiments of the invention will now be described, by way of example only, with reference to the accompanying drawings, in which:

Figure 1 is a block diagram schematically showing a service delivery network in which a first embodiment of a conflict handler of the invention is implemented;

Figure 2 is a block diagram schematically showing further details of a user system of the service delivery network of Figure 1;

Figure 3 is a block diagram schematically showing further details of a network services broker of the service delivery network of Figure 1;

Figure 4 is a process flowchart showing process steps carried out in an example of a network services brokering process performed by the network services broker of Figure 1;

Figure 5 is a process flowchart showing process steps carried out in another example of a brokering process performed by the network services broker of Figure 1;

Figure 6 schematically illustrates the structure of a rule syntax schema that may be employed in the processes of Figures 4 and 5;

Figure 7 schematically illustrates further details of the structure of a body element of the rule syntax schema of Figure 6;

Figure 8 schematically illustrates further details of the structure of a trigger element of the rule syntax schema of Figure 6;

Figure 9 schematically illustrates further details of the structure of an activeService element of the rule syntax schema of Figure 6;

Figure 10 schematically illustrates further details of the structure of a location element of the rule syntax schema of Figure 6;

Figure 11 schematically illustrates further details of the structure of a service element of the rule syntax schema of Figure 6;

Figure 12 is a flowchart showing certain process steps carried out in a first embodiment of a conflict handling module of the invention;

Figure 13 is a schematic illustration of how conflict-resolved results are arrived at during the process shown in Figure 12;

Figure 14 is a flowchart showing certain process steps carried out in a second embodiment of a conflict handling module of the invention;

Figure 15 is a schematic illustration of how conflict-resolved results are arrived at during the process shown in Figure 14;

Figure 16 is a flowchart showing certain process steps carried out in a third embodiment of a conflict handling module of the invention; and

Figure 17 is a schematic illustration of how conflict-resolved results are arrived at during the process shown in Figure 16.

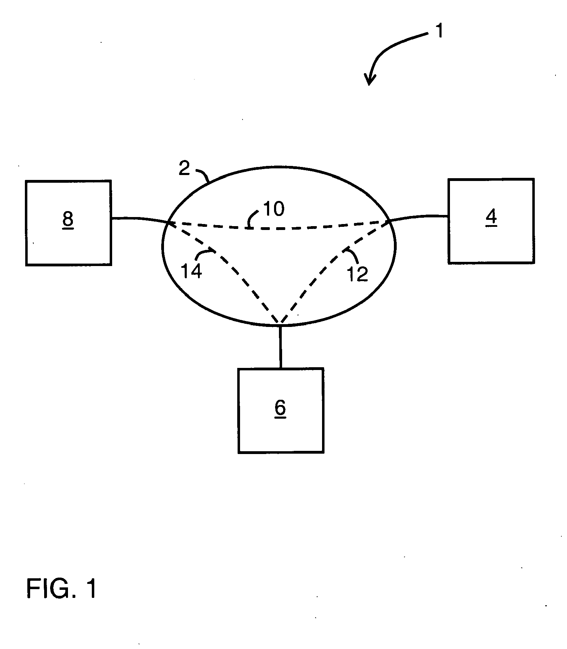

Figure 1 is a block diagram schematically showing an example of a service delivery network 1 in which embodiments of a conflict handler according to the present invention may be implemented. The service delivery network 1 comprises an IP network 2 through which are coupled a network services broker 4, a plurality of service providers 6 and a plurality of user systems 8. In practice there are a large number service providers and user systems, however for clarity only one service provider 6 and one user system 8 are shown in Figure 1. For ease of representation, the dynamic packet switched communications links provided by the IP network 2 between the above described entities are shown as being provided in the form of a communications link 10 coupling the user system 8 and the network services broker 4, a communications link 12 coupling the network services broker 4 and the service provider 6, and a communications link 14 coupling the service provider 6 and the user system 8.

In overview, the service delivery network 1 operates as follows. The user system 8 comprises plural devices that may be provided with plural services from the service provider 6 and possibly other service providers (not shown in Figure 1) via the IP network 2. The user system 8 determines, or has determined for it, such aspects as the following: which of these services to invoke; which device of the user system 8 to run an invoked service on; what functionality of a chosen device to use to run the invoked service on; and so on. Determination of such aspects is performed by co-operation between the network services broker 4 and the user system 8. For example, the network services broker 4 may determine such aspects using certain rules and data specific to the particular user system 8 as well as conflict-resolving rules and processes that are not specific to the particular user system 8. Further details will be explained below.

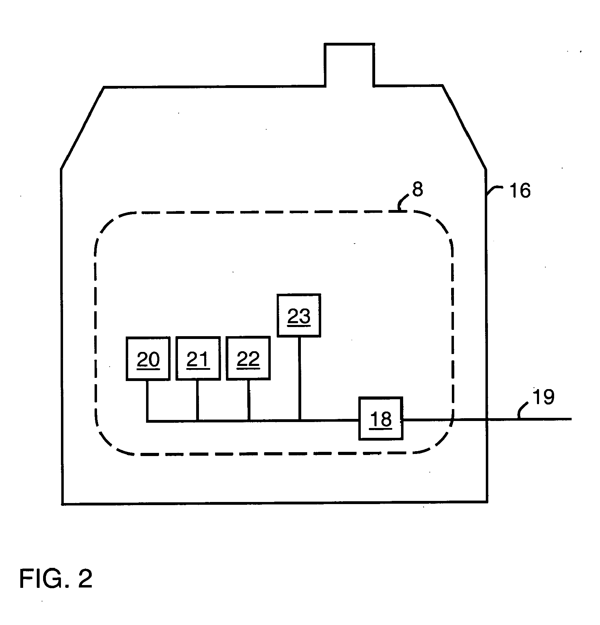

Figure 2 is a block diagram schematically showing further details of the user system 8. In this example, the user system 8 is located at a user's home 16. The user system 8 comprises a user control module 18 and a plurality of devices coupled to the user control module. Coupling between the user control module 18 and respective devices may be by any suitable means, for example hard-wired, local radio network, and so on. The user control module 18 is also coupled via a communications link 19 to the IP network 2. In this example the plurality of devices comprises four devices, which in this example are a first user device 20 which is a television 20, a second user device 21 which is a personal digital assistant (PDA) 21, a third user device 22 which is a telephone 22, and a fourth user device 23 which is a personal computer 23.

Services which may be provided in this example by the service provider 6 via the IP network 2, communications link 2 and the user control module 18 include services that each may be used by one or more of the devices 20-23. These services include, by way of example, VoIP for telephone calls via the computer 23 and/or the telephone 22, video-streaming of movies and television programmes for viewing on the television 20 or the computer 23, message and email services provided to the computer 23 and/or telephone 22 and/or PDA 21, and so on.

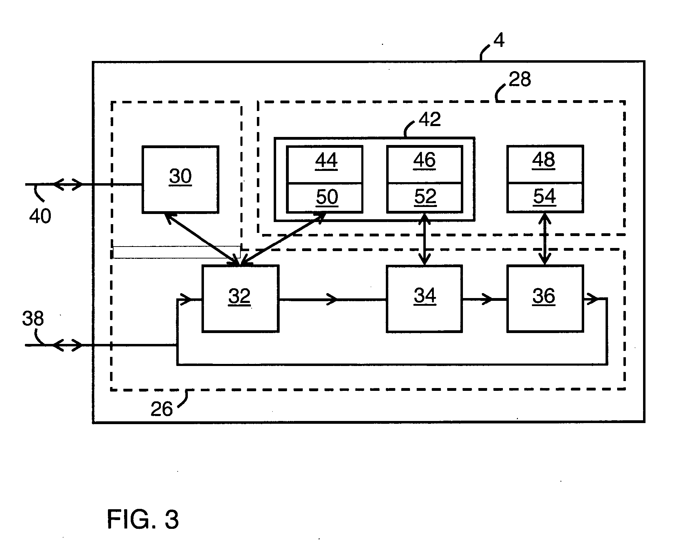

Figure 3 is a block diagram schematically showing further details of the network services broker 4. The network services broker 4 comprises a controller 26, hereinafter referred to as the network services broker controller 26, and a storage medium 28 coupled to the network services broker controller 26.

The network services broker controller 26 comprises a context module 30, a rule query module 32, a rule precedence module 34 and a conflict handling module 36. The rule query module 32 is coupled to the context module 30 and the rule precedence module 34. The rule precedence module 34 is further coupled to the conflict handling module 36.

The network services broker controller 26 is coupled via a communications link 38 to the IP network 2. More particularly, inward communications from the communications link are coupled as an input to the rule query module 32; and an output of the conflict handling module 36 is coupled to the communications link for outward communications.

The context module 30 is provided with a communications link 40 for communicating with external information sources.

The storage medium 28 stores general instructions and/or data (not shown) that are used by the network services broker controller 26 for basic operation such as communication with other entities, and for carrying out the processes described below.

The storage medium 28 further stores user defined rules 42, comprising service selection rules 44 and precedence rules 46. The storage medium 28 further stores provider rules 48.

The rule query module 32 is in effect coupled to the service selection rules 44 via an XQuery interface 50. The rule precedence module 34 is in effect coupled to the precedence rules via an XQuery interface 52. The conflict handling module 36 is in effect coupled to the provider rules 48 via an XQuery interface 54.

For the various rules, i.e. the service selection rules 44, the precedence rules 46 and the provider rules 48, are *"if...then..."* statements, expressed in terms of a "Body" (the "If" part) and a "Head" (the "then" part). The Body contains the rule predicates i.e. the conditions to test for e.g. the time is after 6:00pm (18-00 hours) but before 8:00am (08-00 hours). The Head contains the action to be performed (usually the service to select) if all the rules predicates are true i.e. the result is *"Connect a call to the called user"* if all predicates evaluate to true. Base functions form the predicates of the rules used. They define a user's context. In this example they include Location, Calendar, Caller ID, Active Devices, Active Services, Time, and Trigger/Invite Type.

More particularly, the user's context comprises one or more conditions that can be equated to some or all of a rule's predicates. A rule can be said to be true for a given context if one or more of its predicates match all the conditions of the context. But only if at the same time none of the rule's stated predicates are logically opposite those of the context. For example, an *"At Home"* context could be defined as when *Location="Home" AND Time> 18-00 AND Time<07-00.*

The service selection rules 44 are rules that are set up by the user and that can be changed by the user (i.e. they are "owned" by the user). Thus the service selection rules 44 are user-specific. The service selection rules 44 may conveniently be provided in the form of a user profile. In this example, an example of a service selection rule is *"Do not allow anyone to contact me after 6pm unless it is a family member"*. In this example, the service selection rules 44 are in the form of XML documents, together constituting a native XML database.

The precedence rules 46 are rules that are a form of control rule that are set up by the user and that can be changed by the user (i.e. they are "owned" by the user). The precedence rules 46 determine a user-owned precedence of the service selection rules 44. Thus the precedence rules 46 are user-specific. The precedence rules 46 are defined in terms of a rule identification label (i.e. the rule itself or the base functions it contains). The precedence rules 46 may conveniently be provided in the form of a user profile, e.g. in an overall user profile containing service selection rule choices and precedence rule choices. In this example, an example of a precedence rule is *"For written communication, telephone-based short message system (text) is preferred over computer-based email"*. In this example, the precedence rules 46 are in the form of XML documents, together constituting a native XML.

The provider rules 48 perform several functions, as follows:

(i) To define which services are mutually exclusive at runtime, and of those service(s) which are more dominant.
(ii) To control chaining in response to various network triggers or events, overriding any settings by the user as necessary.
(iii) To act as default rules when no user defined rules exist - e.g. *"If the user does not answer his phone in 6 rings then divert to Voice Mail"*.

The provider rules 48 are set up by, and can be changed by, a third party (i.e. are "owned" by the third party). The third party may be the user's primary service provider or a service provider the user obtains services from and who is providing the service brokering. Thus the provider rules 48 are not user-specific.

The provider rules 48 include as a subset "System Defined Override Rules" - these are a form of "control rule" that the third party service defines to determine precedence between services irrespective of context. This is done by defining mutually exclusive services and which of these has priority. In this example, an example of such a mutually exclusive service situation is when both the following service selection rules have been defined: *Service Selection Rule 1 - always connect calls when Caller ID = manager; Service Selection Rule 2 - divert all calls to voice mail when Calendar = meeting.* In this example, a corresponding example of a provider rule for handling this conflict is *"Connect Call takes precedence over Divert to Voice Mail"*.

In operation, the context module 30 accesses various data sources via the communications link 40. Generally, these could be reusable network capabilities (e.g. location, presence etc) accessed via web services, to obtain base function values for a given user i.e. their current context. In this example the context module determines information of the base function values used in this example as mentioned above, i.e. Location, Calendar, Caller ID, Active Devices, Active Services, Time, and Trigger/Invite Type. However this may vary in other examples, and will typically depend upon how a given service provider defines the user's contexts.

In operation, the rule query module 32 processes the service selection rules 44, in accordance with a given derived context provided by the context module 30, to identify relevant service selection rules for the context. In this example, where the service selection rules 44 are in XML format, the rule query module 32 is an XQuery engine, and the rule query module 32 queries the service selection rules 44 via the XQuery interface 50. (XQuery, well known to the skilled person, is a query language with some programming language features specifically designed for querying collections of XML data.)

In operation, the rule precedence module 34 processes the precedence rules 46 to determine a priority for implementation of services, for example when plural possibilities remain after appropriate context-dependent service selection rules have been selected by the rule query module 32. In this example, where the precedence rules 46 are in XML format, the rule precedence module 34 is an XQuery engine, and the rule precedence module 34 queries the precedence rules 46 via the XQuery interface 52.

In operation, the conflict handling module 36 processes the provider rules 48 to resolve any conflicts present in the selection of services provided by the processing carried out by the rule precedence module 34, for example conflicts such as mutually exclusive services that remain selected even after the processing carried out by the rule precedence module 34. Such conflicts may be ones that arise irrespective of the previously determined (user-based) context. In this embodiment of the conflict handler, where the provider rules 48 are in XML format, the conflict handling module 36 is an XQuery engine, and the conflict handling module 36 queries the provider rules 48 via the XQuery interface 54 (in this example the conflict handling module 36 and the relevant part of the storage medium 28 may be considered as together forming an embodiment of a conflict handler, whereas in other circumstances just a conflict handler module may form an embodiment, whereas in yet further circumstances a conflict handler may be embodied by just the storage medium storing processor-implementable instructions for the conflict handling process described below).

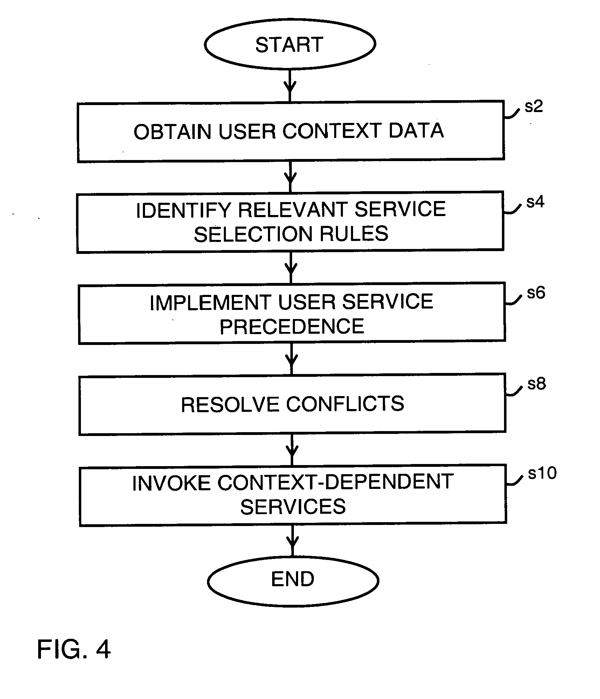

An overview of process steps carried out under the present example by the various above-described items will now be described with reference to the process flowchart of Figure 4.

At step s2, the context module 30 obtains user context data.

At step s4, the rule query module 32 identifies relevant service selection rules, i.e. service selection rules that are relevant to the context defined by the user context data obtained by the context module 30. In this example the rule query module 32 does this by performing an XQuery query of the service selection rules 44 via the XQuery interface 50.

At step s6, the rule precedence module 34 implements user service precedence, to resolve any user-defined precedence issues present in the selected service selection rules. In this example the rule precedence module 34 does this by performing an XQuery query of the precedence rules 46, for currently selected selection rules, via the XQuery interface 52.

At step s8, the conflict handling module 36 resolves conflicts present in the user precedence-sorted selection of services provided by the processing carried out by the rule precedence module 34 at previous step s6. In this example the conflict handling module 36 does this by performing an XQuery query of the provider rules 48, for the currently selected and precedence-sorted selection rules, via the XQuery interface 54. As a result, a list or definition of services to be invoked is produced.

At step s10, context dependent services are invoked, i.e. the list or definition of services to be invoked is output over the communication link 38 to be communicated via the IP network 2 to the user system 8 and/or the service provider 6.

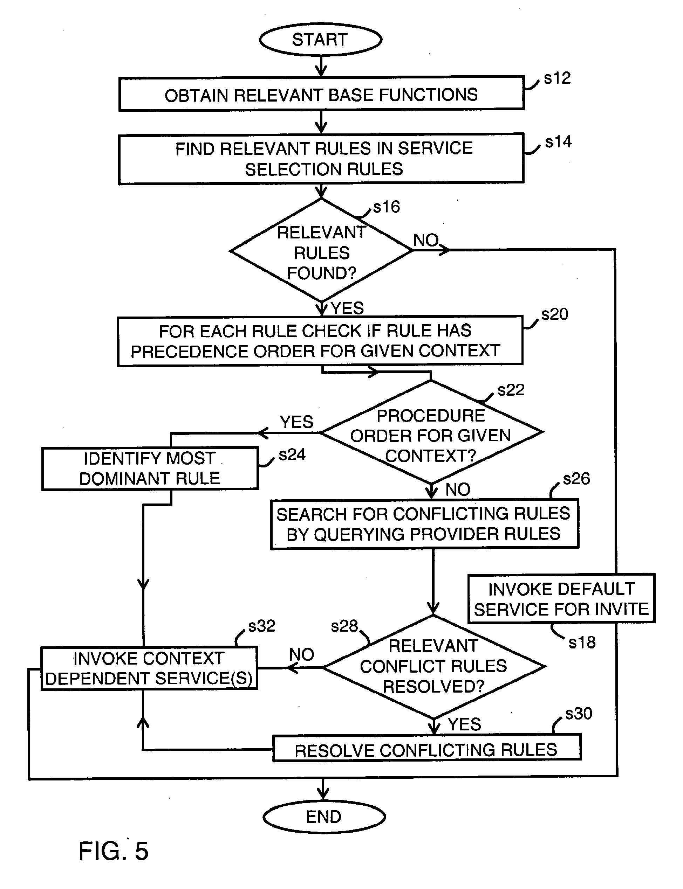

As will be appreciated by the skilled person, the above described process steps may be implemented in various different orders and according to other varying detail. Details of another example of a brokering process performed by the network services broker 4 will now be described with reference to the process flowchart of Figure 5.

In this example, the process is initiated by a request coming into the network services broker 4 (e.g. from the service provider 6) requesting context dependent services for a given user, and specifying an invite or trigger event. The request may also contain an originating user (e.g. user 8) and/or application. At step s12, the network services broker 4 obtains relevant base functions, such as user location, calendar, active device etc. In the case of the network services broker of Figure 4 this is performed by the context module 30. Relevancy of base functions is dependent upon the type of network trigger/invite initiating the service request.

At step s14, the network services broker 4 attempts to find relevant user-specific context-dependent service selection rules for the context defined by the obtained base functions. In the case of the network services broker of Figure 4 this is performed by the rule query module 32 accessing the service selection rules 44 via the XQuery interface 50.

Decision box s16 of Figure 5 indicates respective outcomes for step s14. If relevant user-specific context-dependent service selection rules for the context defined by the obtained base functions are not found at step s14, then the process continues to step s18, where the network services broker 4 invokes a default service corresponding to the particular invite/trigger event that initiated the process.

If, however, relevant user-specific context-dependent service selection rules for the context defined by the obtained base functions are found at step s14, then the process continues to step s20, where the network services broker 4 checks, for each found service selection rule, whether the rule has a precedence order assigned to it for the given context.

Decision box s22 of Figure 5 indicates respective outcomes for step s20 for a given found service selection rule. If the service selection rule does have a precedence order assigned to it for the given context, then the process continues to step s24. If, however, the service selection rule does not have a precedence order assigned to it for the given context, then the process continues instead to step s26.

If the process arrives at step s24, then at step s24 the network services broker 4 identifies the most dominant service selection rule. In the case of the network services broker of Figure 4 this is performed by the rule precedence module 34 accessing the precedence rules 46 via the XQuery interface 52. Thereafter the process continues to step s32.

If the process arrives at step s26, then at step s26 the network services broker 4 searches for conflicting rules or situations from among the selected service selection rules. In the case of the network services broker of Figure 4 this is performed by the conflict handling module 36 accessing the provider rules 48 via the XQuery interface 52. Decision box s28 of Figure 5 indicates respective outcomes for step s26. If conflicting rules or situations are not found, then the process continues to step s32. If, however, conflicting rules or situations are found, then the process continues instead to step s30.

If the process arrives at step s30, then at step s30 the network services broker 4 resolves the conflicting rules. In the case of the network services broker of Figure 4 this is performed by the conflict handling module 36, as will be described in more detail later below. Thereafter the process continues to step s32.

When the process arrives at step s32, at step s32 the network services broker 4 invokes the resulting context dependent services. In the case of the network services broker of Figure 4 this is performed by the output from the conflict handling module 36 being sent to the user or service provider via communications link 38.

Further details of the rule query module 32, and the XQuery process used to query the service selection rules 44 via the XQuery interface 50, which may be applied in any of the above described examples, will now be described.

As described above, the rule query module 32 generates a query based on the base function values obtained by the context module 30.

The use of an XQuery engine (e.g. instead of a conventional Rules Engine) in the above examples to detect context dependent rules has included consideration of the following technical issues.

A conventional rules engine queries the facts as it evaluates each rule. In the above examples in effect a database is used as a querying engine, and thus all the rules for a given set of facts are queried. However, this has the following implications:

- Not all the rules contain all the base functions used in the query. The query will typically always have to contain all the base functions as the database querying engine cannot determine which subset of base functions are relevant in a given situation. This is resolved by the use of *"Do Not Care"* states for unused base functions in the rules.
- For example, a rule that states *"IF Trigger (Incoming Call) AND Location(Office) AND Calendar(Meeting) THEN Action(Divert to VM)"* implies the rule is true regardless of what value Active Device and Active Service have. This is resolved by including a "base function exist test" i.e. a test for the presence of an element with that name in the Rule in the XQueries for all the base function values that are not available. In the above example this would be a base function exist test on the base functions Active Device and Active Service.
- This approach requires the schema used for storing the rules to have an element tag name equivalent to each base function.
- If it is desirable for the schema to interact with other components using Rule Markup Language (RuleML), then the rules would need to be stored as RuleML. This may be readily accomplished at the rule creation stage by using an XSLT stylesheet. Alternatively, the rules may be an XML document conformant to the present schema (as in this example) and then converted to RuleML for interchange to the other components. RuleML is defined by the Rule Markup Initiative and permits both forward (bottom-up) and backward (top-down) rules in XML for deduction, rewriting and further inferential-transformational tasks. XSLT stands for XSL Transformations, where XSL stands for Extensible Stylesheet Language. XSLT is an XML language for transforming XML documents. RuleML and XSLT are well known to the skilled person.
- As the database query engine does not evaluate each rule it cannot determine the Action if a rule contains a mix of AND, OR statements. It will only identify rules that have the relevant base functions based on whether the original XQuery contains matching AND, OR. Identifying the relevant rules may be resolved by running permutations of original XQuery using AND, OR. However, in some scenarios, e.g. if a large number of base functions exist, this may become inefficient.

- This problem may be avoided by pre-processing the rules at the time they are created and storing the rules only as AND statements.
- Rules that contain OR statements may be broken up into separate rules when stored. This internal manipulation need not be perceived by the user as when he is viewing the rules these OR rules may be regenerated by simply querying the rules on action and identifying which rules have the same action.
- A NOT operator (negation clause) used in a rule cannot be evaluated by a query engine for the same reasons as described above. However this too may be resolved by adding an extra term to the XQuery that tests for a negation attribute for that base function.
- Some rules may contain a range of values for a given base function (e.g. time>0800, time<0900). The base function itself only returns a single value, the current time. This is resolved by query taking into account the 'greater than' and 'less than' attributes used in the Rule schema.

The resulting query is typically relatively large and complex. However, this is compensated for by the factor that the query is only applied to one XML document (i.e. the relevant user's profile).

The above described approach of using a database and querying the database with a database querying engine has an advantage of avoiding the need to use the additional inferencing capability of a conventional rules engine.

An example of an XQuery database query following some of the details described above will now be given. It will be appreciated by the skilled person that this is presented in a stylised schematic form to render the description more readable and salient, i.e. the following example is not presented in a fully valid XQuery form. Nevertheless, the skilled person can readily adapt the principles sand insight taught by the following example to form a valid query.

The following example of a query is created based on the base functions below, and is used to select relevant service selection rules from the user profile. In the following, the invite type is "RTC_Invite", which stands for Real Time Communications.

Base Functions:

| Location | Calendar | Caller ID | Active Devices | Active Services | Time | Invite Type |
|----------|----------|-----------|----------------|-----------------|------|-------------|
| Office | Meeting | Anyone | PDA | News | Time | RTC_Invite |

Query:

```
((trigger='RTC_Invite' and trigger/@constraint!='fneg') or (trigger!='RTC_lnvite' and
trigger/@constraint='fneg') or not(trigger))
and
((originatingUser='anyone' and originatingUser/@constraint!='fneg') or
(originatingUser!='anyone' and originatingUser/@constraint='fneg') or
not(originatingUser)) and
((calendar='Meeting' and calendar/@constraint!='fneg') or (calendar!='Meeting' and
calendar/@ constraint='fneg') or not(calendar))
and
((location='Office' and location/@ constraint!='fneg') or (location!='Office' and
location/@constraint='fneg') or not(location))
and
((time<1100 and time/@constraint='greaterthan') or (time>1100 and
time/@constraint='lessthan') or not(time))
and
((activeDevice/@constraint='fneg') and (activeDevice!='PDA')) or not(activeDevice))
and
((activeService/@constraint='fneg') and (activeService!='News')) or
not(activeService)))or((((activeDevice/@constraint!='fneg') and(activeDevice='PDA')) or
not(activeDevice)) and (((activeService/@constraint!='fneg') and(activeService='News')) or
not(activeService))))
```

Thus it will be appreciated that the queries are constructed based on the types of base function (context) supplied to the rule query module 32 from the context module 30. The base functions can be single value elements and/or multi-value elements. There are two types of single value elements, firstly ones that contain discrete values such as location='home' etc, and secondly ones that have a range of values such as time>0800, time<1000. Multi-value elements contain multiple discrete values for a given base function name, e.g. Active Devices = PDA, Telephone, Television.

The above details of XQuery process as described for the case of the rule query module 32 also apply to the rule precedence module 34 and the conflict handling module 36, in particular in relation to how they access, respectively, the precedence rules 46 via the XQuery interface 52 and the provider rules 48 via the XQuery interface 54, although their queries tend to be simpler than the queries for the rule query module 32.

Further details of the native XML databases of the service selection rules 44, the precedence rules 46, and the provider rules 48, and their respective XQuery interfaces 50, 52, 54, which may be applied in any of the above described examples, will now be described.

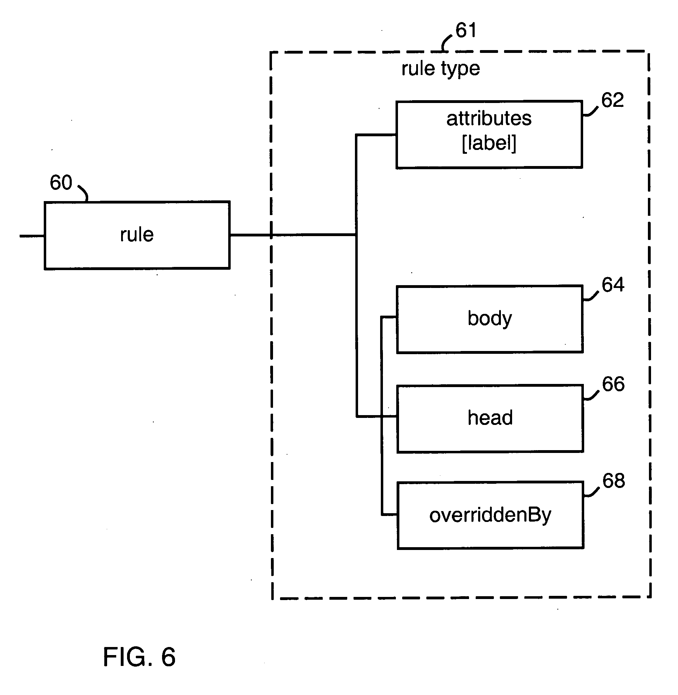

The schema used by both the XML database and the XQuery interface defines a rule syntax used in implementation of the above examples. Selected components of a suitable schema are described below with reference to Figures 6-11, which show schematic simplified representations of a visualisation of the schema.

Figure 6 schematically illustrates the structure of a rule syntax schema that may be employed in the above examples. Element 60 contains a rule. The rule element 60 has a child element that comprises a rule type element 61. The rule type element 61 comprises an attributes element 62, a body element 64, a head element 66 and an overriddenBy element 68.

The attributes element 62 is a label attribute which is used as a unique identifier for each rule. This may be used by the rule precedence module 34 if the user has defined a precedence value for the rule.

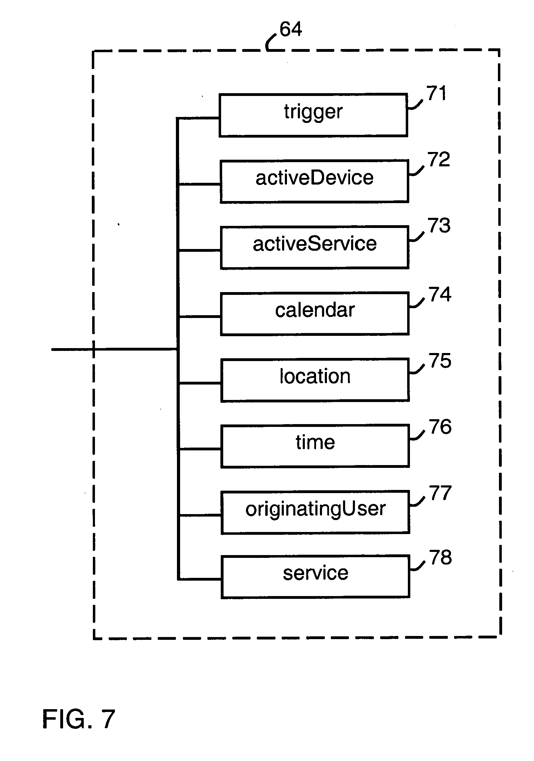

The body element 64 contains multiple predicates. Only the AND operator is used. This schema does not allow OR. Further details of the body element 64 are described later below with reference to Figure 7.

The head element 66 contains an action or event, in this example service to activate and additional string.

The overriddenBy element 68 contains a list of rule labels that have higher precedence than this rule.

Figure 7 schematically illustrates further details of the structure of the body element 64. The body element 64 has the following child elements: a trigger element 71, an activeDevice element 72, an activeService element 73, a calendar element 74, a location element 75, a time element 76, an originatingUser element 77 and a service element 78. The following further details of some of the elements are given by way of example.

The trigger element 71 is a special base function that may indicate what type the query is e.g. VoIP invite, service discovery etc.

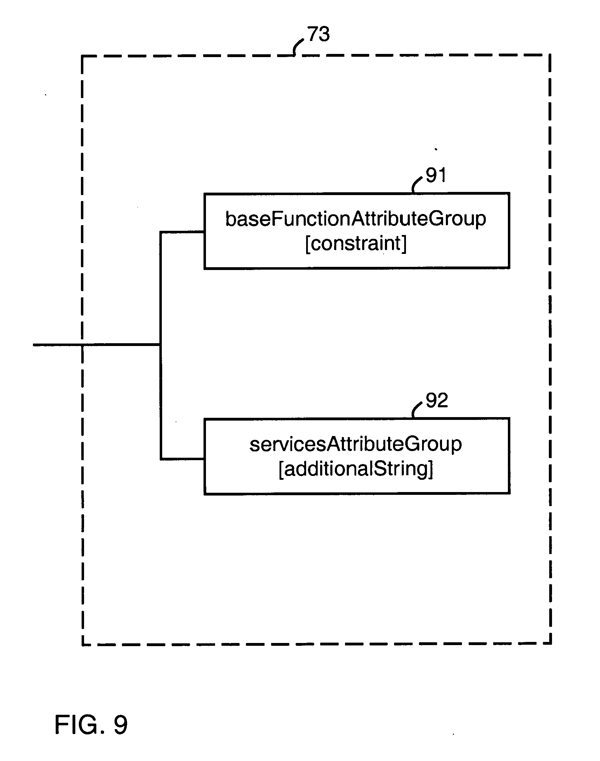

The activeService element 73 is used for chained or sequence services. Further details of the activeService element 73 are described later below with reference to Figure 9.

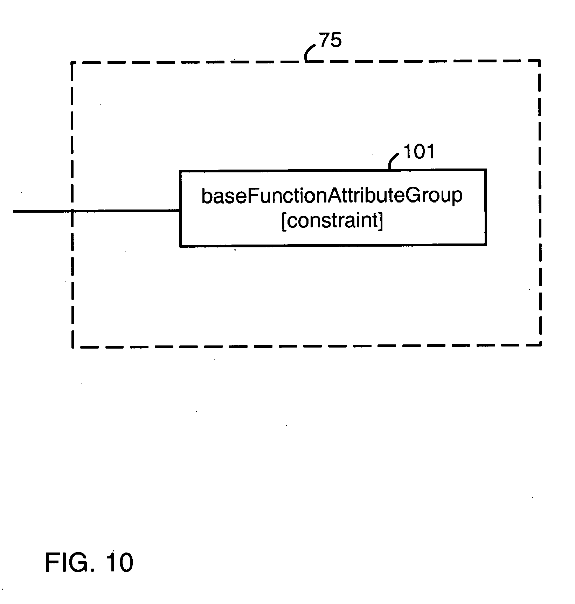

The location element 75 is described in further detail later below with reference to Figure 10. This is an example of a simple base function that can only have a discrete value.

The time element 76 is the only base function, in this example, that can take a range. Hence it has two elements that are respectively defined using "less than" and "greater than" constraint attributes.

The originatingUser element 77 refers to originating caller in a communications application in a service discovery scenario. This may be the same as the destination user or may be a third party application.

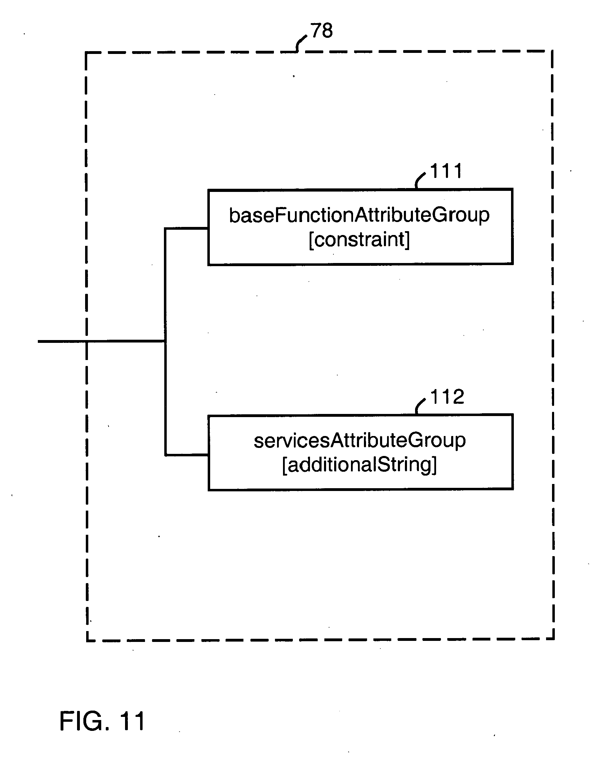

The service element 78 is used to contain a service priorities (overrides) optional element. If this arises, there will be two elements as mutually exclusive services defined in a pair-wise manner. This element is only used in the provider rules 48. Further details of the service element 78 are described later below with reference to Figure 11.

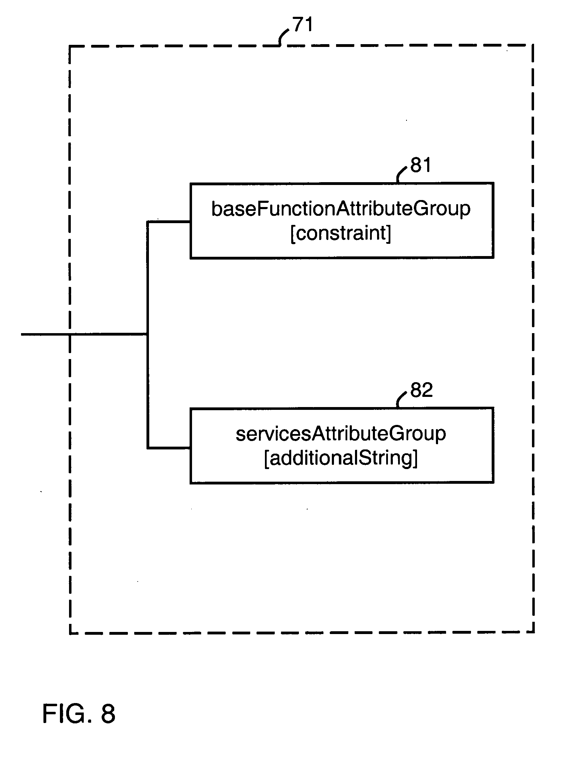

Figure 8 schematically illustrates further details of the structure of the trigger element 71. The trigger element 71 has the following child elements: a baseFunctionAttributeGroup 81 which is of a constraint attributes form, and a servicesAttributeGroup 82 which is of an additionalString form.

Figure 9 schematically illustrates further details of the structure of the activeService element 73. The activeService element 73 has the following child elements: a baseFunctionAttributeGroup 91 which is of a constraint attributes form, and a servicesAttributeGroup 92 which is of an additionalString form.

Figure 10 schematically illustrates further details of the structure of the location element 75. The location element 75 has the following child element: a baseFunctionAttributeGroup 101 which is of a constraint attributes form.

Figure 11 schematically illustrates further details of the structure of the service element 78. The service element 78 has the following child elements: a baseFunctionAttributeGroup 111 which is of a constraint attributes form, and a servicesAttributeGroup 112 which is of an additionalString form.

The respective baseFunctionAttributeGroup 81, 91, 101, 111 of the trigger element 71, the activeService element 73, the location element 75 and the service element 78, contains all the attribute values that can be used in the base function element. The respective baseFunctionAttributeGroup 81, 91, 101, 111 comprises a constraint attribute that indicates if the value is greater than, less than, equal or negated.

The respective servicesAttributeGroup 82, 92, 112 of the trigger element 71, the activeService element 73 and the service element 78, contains all the attribute values that can be used in service, application (in the rule head) and trigger elements. The additionalString attribute comprises an optional additional string that may be part of the service invocation trigger.

Note in the above examples, the base function elements contain an attribute indicating if the value they contain is equal, greater than, less than or negated. The service element is used to define services that are mutually exclusive. When the service element is used, thus referring to the provider rules 48, the head denotes the more dominant or the service that will be triggered if selection of the service selection rules results in both services being selected.

Further details of operation of the rule precedence module 34 when the rule syntax is as above will now be described. For each rule in a set of rules selected by the rule query module 32, the rule precedence module 34 checks if the rule contains the rule labels in the "overriddenBy" element (such as the overriddenBy element 68 shown in Figure 6) that match another rule of the set of selected rules. If a match is found, the selected rule is dropped. This process is carried out for the rules of the set in turn.

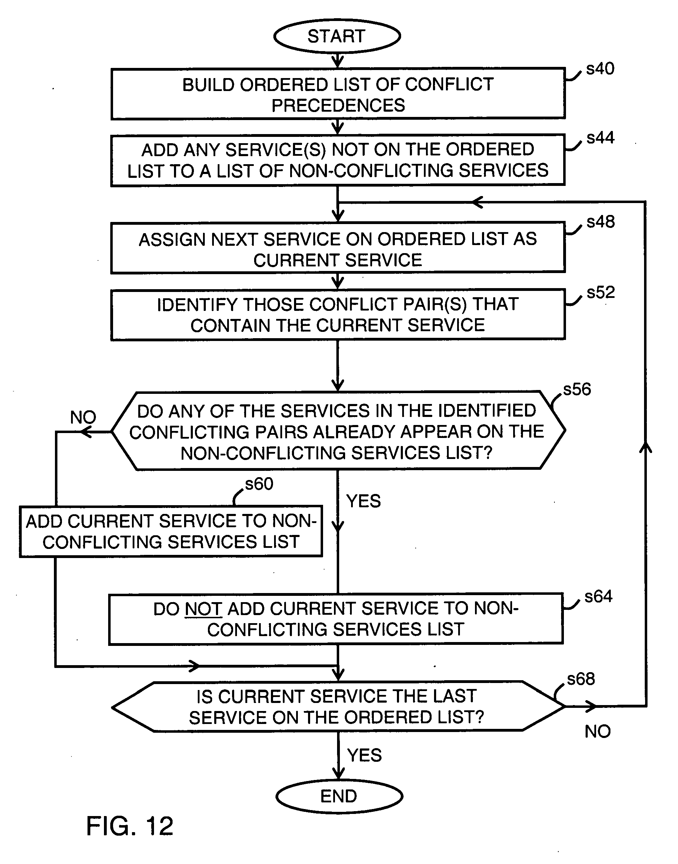

Further details of embodiments of the conflict resolving process carried out by the conflict handling module 36 will now be described with reference to Figures 12-17.

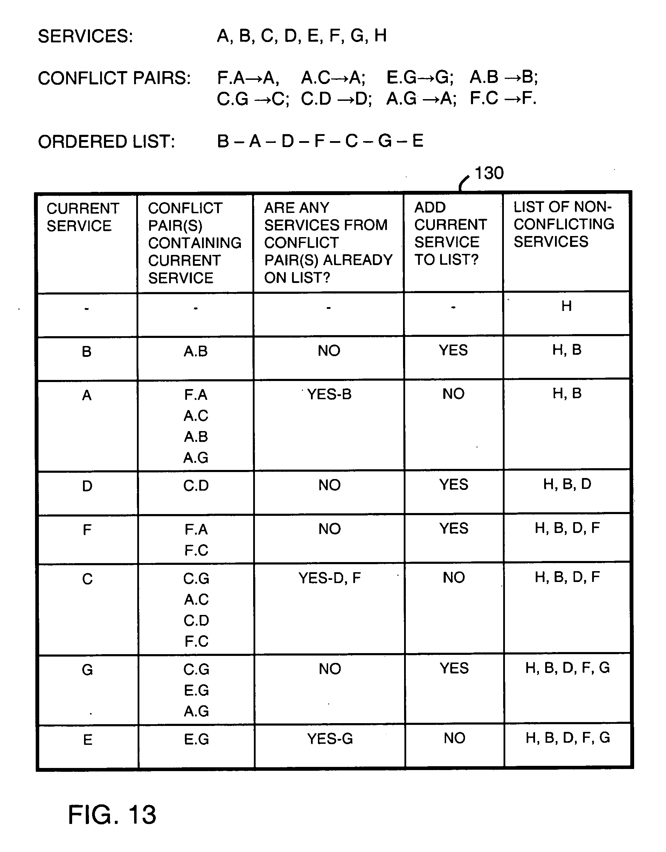

A first embodiment of the conflict handling module 36 will now be described with reference to Figures 12 and 13. Figure 12 is a flowchart showing certain process steps carried out by the conflict handling module 36. Figure 13 is a schematic illustration of how the conflict-resolved results are arrived at during the process shown in Figure 12.

Let us assume that eight services are required to be processed, labelled for convenience as services A, B, C, D, E, F, G, H (these are shown in Figure 13 for ease of reference).

Let us further assume that the following conflict pairs exist for these services:

$$F.A \rightarrow A; \quad A.C \rightarrow A; \quad E.G \rightarrow G; \quad A.B \rightarrow B; \quad C.G \rightarrow C; \quad C.D \rightarrow D; \quad A.G \rightarrow A; \quad F.C \rightarrow F;$$

where the "$\rightarrow x$" indicates that "x" is the service that takes precedence out of the two conflicting services, i.e. is the "winning" service of the conflicting pair of services - e.g. F.A$\rightarrow$A indicates that services F and A conflict, i.e. are mutually exclusive, and moreover indicates that service A takes precedence over service F, i.e. service A is the winning service of the conflicting pair of services. These conflict pairs are also shown in Figure 13 for ease of reference.

At step s40, the conflict handling module 36 builds an ordered list of conflict precedences. The ordered list lists the services in an overall order that is internally consistent with all the conflict pairs. In this embodiment, the ordered list does not include any of the services that have no conflict (i.e. any service that does not appear in at least one of the conflict pairs - in this example service H). Any suitable algorithm can be employed for deriving the ordered list. In this example the resulting ordered list is B-A-D-F-C-G-E, where service B can be said to be at the top of the list, i.e. in first position, service A in the next position, i.e. in second position, and so on down to service E which is at the bottom of the list, i.e. in seventh and last position. Thus it will be appreciated that for each of the above listed conflict pairs, the winning service of the pair always appears higher, i.e. earlier, in the ordered list than the losing service of the pair.

It should be noted that for any set of conflict pairs there may be more than one possible ordered list that fulfils the criterion above. For example, for the above conflict pairs, the following six services will always be in the relative order: B-A-F-C-G-E; whereas the service D can be in any position above service C. Hence any of the following further ordered lists are possible: D-B-A-F-C-G-E; B-A-F-D-C-G-E; B-D-A-F-C-G-E. When, as in this example, there is more than one possible ordered list, any of the ordered lists may be used in the remainder of the process, as they will all give the same overall outcome, as will be understood when the overall process is explained below.

Returning to the present example, the ordered list B-A-D-F-C-G-E built at step s40 is shown for ease of reference in Figure 13.

Further steps in the process will now be described. In the following steps, it is determined which services may be added to a list of non-conflicting services. In this embodiment, firstly any services not on the ordered list are added to the list of non-conflicting services. Thereafter, determination of which of the services on the ordered list may be added to the list of non-conflicting services is performed by processing each service on the ordered list sequentially, and in the order in which the respective services appear on the ordered list. The final version of the non-conflicting services list represents a group of services that may all be invoked or run together without conflict, i.e. without contravening any of the conflict pairs listed above.

For ease of reference, Figure 13 shows an ongoing outcomes table 130, which shows (moving down the table 130) how the results as to which services are to be added to the non-conflicting services list develop. The ongoing outcomes table 130 has five columns, which represent, working from left to right across the page, the service currently being processed (termed the "current service"); any conflict pair(s) containing the current service; whether any of the services in the conflicting pair(s) are already on the non-conflicting services list; whether therefore the current service is to be added to the non-conflicting services list; and in the final column, the non-conflicting services list as updated due to the processing of the current service of that row.

In more detail, at step s44 the conflict handling module 36 adds any of the services not on the ordered list to the list of non-conflicting services. In this example, service H is therefore added to the non-conflicting services list. In Figure 13, the first row of the ongoing outcome table 130 represents the effect of this step. None of the columns are in fact relevant for this particular step except the last column showing the updated non-conflicting services list which now has just service H added to it.

At step s48, the next service on the ordered list is assigned as the "current service". At this stage, none of the services on the ordered list have yet been assigned and processed as the current service, hence at this stage the next service on the list is the first service on the ordered list, namely service B (which is therefore shown in the current service column of the second row of the ongoing outcome table 130).

At step s52, those conflict pairs that contain the current service as one of the services of the pair are identified. In this example, for current service B, only the conflict pair A.B comprises service B, hence this is the only identified pair, as listed in the second column of the ongoing outcome table 130.

At step s56, it is determined whether any of the services in the conflicting pair(s) identified in previous step s52 already appear on the non-conflicting services list. In this example, for current service B, since the identified conflicting pair(s) comprise services A and B, and neither of these services is already on the non-conflicting services list, the answer to the determination step is "No", as indicated in the third column of the ongoing outcome table 130. (In fact, the answer is bound to be "No" for this processing of the first service on the ordered list as the current service; however this will not be the case when step s56 is repeated for other current services later in the process as progress is made down the ordered list.) Moreover, for each following current service, it will always be the case that the current service will not already be on the non-conflicting services list, since it cannot be added until it has its turn as the current service. Therefore, at step s56 it suffices to determine whether the respective other service of each pair (i.e. each respective service that is not the current service) is already on the non-conflicting pairs list. Nevertheless, depending on the details of the algorithm employed, it may be convenient or efficient in terms of programming or implementation of the algorithm, as in this embodiment, to include determining whether the current service is already on the non-conflicting pairs list even though the result will always be that it is not.

When the outcome of determining step s56 is "No", i.e. when none of the services in the conflicting pair(s) identified in previous step s52 already appear on the non-conflicting services list, then the process moves to step s60. At step s60, the current service is added to the non-conflicting services list. In other words, whenever (at step s56) it is determined that none of the services in the conflicting pair(s) identified in previous step s52 already appear on the non-conflicting services list, then the current service is added to the non-conflicting services list. This is the case in the present example for current service B, hence here service B is to be added to the non-conflicting services list (as indicated by the entry in the fourth column of the ongoing outcome table 130). Since the non-conflicting services list already previously contained service H, then at the end of this processing of service B as the current service, i.e. once the current service is added to the non-conflicting services list, the non-conflicting services list now contains services H and B, as indicated in the fifth and final column of the ongoing outcome table 130.

The above process from step s48 is repeated for each service on the ordered list in turn, in the order the services appear on the ordered list, until all the services on the ordered list have been processed. This repetition is implemented by virtue of step s68 at which it is determined whether the current service is the last service on the ordered list. If the current service were the last service on the ordered list, then the process would be completed. However, when for any current service that current service is not the last on the ordered list, then, as at this stage of the present example, the process indeed returns to step s48. Steps s48-s68 are then repeated with the next service on the ordered list, in this case service A, assigned (at step s48) and processed as the current service (and forming the next row in the ongoing outcome table 130).

In the present example, for service A being processed as the current service, the conflicting pair(s) containing the current service identified at step s52 are F.A; A.C; A.B; A.G; as shown in the second column of the ongoing outcome table 130 for the row with current service A.

Then, for this case, at step s56 it is determined that one of the services in the conflicting pair(s) identified in previous step s52, namely B, does already appear on the non-conflicting services list. Hence, as indicated in the fourth column of the ongoing outcome table 130, the current service (i.e. service A) is <u>not</u> added to the non-conflicting services list. Thus, the contents of the non-conflicting services list remains as services H and B, as indicated in the fifth column of the ongoing outcome table 130. This process is schematically represented in the process flowchart of Figure 12, for emphasis, as a discrete step s64 defined as "do not add current service to the non-conflicting services list". However it will be appreciated that this in fact represents no change, hence s64 may equivalently be omitted with no difference to the outcome.

Thereafter, the process moves to step s68 and is consequently again returned to step s48 to begin processing of the next service (service D) on the ordered list as the current service. Following the procedures described above provides, for service D as the current service, as shown in the next row of the ongoing outcome table 130, that the

11

identified conflict pair(s) comprising the current service is C.D, that neither C or D is already on the non-conflicting services list, and that consequently the current service D is to be added to the non-conflicting services list, which consequently updates to contain services H, B and D.

Then the next service on the ordered list, namely service F, is processed as the current service, for which (again referring to the appropriate row of the ongoing outcome table 130) the identified conflict pair(s) comprising the current service are F.A and F.C, from which none of services F, A or C is already on the non-conflicting services list, and consequently the current service F is to be added to the non-conflicting services list, which consequently updates to contain services H, B, D and F.

Then the next service on the ordered list, namely service C, is processed as the current service, for which (again referring to the appropriate row of the ongoing outcome table 130) the identified conflict pair(s) comprising the current service are C.G, A.C, C.D and F.C, from which at least one service, in fact two services namely services D and F, are already on the non-conflicting services list, and consequently the current service C is not to be added to the non-conflicting services list, which consequently remains in the state of containing services H, B, D and F.

Then the next service on the ordered list, namely service G, is processed as the current service, for which (again referring to the appropriate row of the ongoing outcome table 130) the identified conflict pair(s) comprising the current service are C.G, E.G and A.G, from which none of services C, G, E or A is already on the non-conflicting services list, and consequently the current service G is to be added to the non-conflicting services list, which consequently updates to contain services H, B, D, F and G.

Then the next service on the ordered list, namely service E, is processed as the current service, for which (again referring to the appropriate row of the ongoing outcome table 130) the identified conflict pair(s) comprising the current service is E.G, from which a service, namely service G, is already on the non-conflicting services list, and consequently the current service E is not to be added to the non-conflicting services list, which consequently remains in the state of containing services H, B, D, F and G.

Since service E is the last, i.e. bottom, service on the ordered list, step s68 results in the process ending. Thus the present state of the non-conflicting services list is the final outcome of that list. That is, in this example applied to the process of this embodiment, the final list of non-conflicting services contains services H, B, D, F and G.

The above described process advantageously allows the possibility (depending on the permutations of the conflict pairs in any given scenario or example) for one or more services to be on the final non-conflicting services list despite losing out to one or more other services in the one-to-one conflict pairs. This happens when such an "other service" that takes precedence over the service in question in a given conflict pair (and which is therefore higher in the ordered list) has itself failed to be placed on the non-conflicting services list due to itself losing to at least one yet further service in a further conflict pair (i.e. has lost to a yet higher service on the ordered list). For example, in the specific example described above, service G appears on the final list of non-conflicting services, despite losing to services A and C in respective conflict pairs A.G→A and C.G→C, because the above described process effectively takes account of the aspect that both these services (i.e. service A and service C) have already been kept off the final non-conflicting services list due to each losing to at least one service that is higher on the ordered list than itself, i.e. in the case of service A, service A losing to service B in the conflict pair A.B→B; and in the case of service C, service C losing separately to three services, namely services A, D and F in respective conflict pairs A.C→A, C.D→D and F.C→F. This advantageous outcome for one or more services to potentially be on the final non-conflicting services list despite losing out to one or more other services in the one-to-one conflict pairs, (as in the case of service G in the above described example) contrasts with conventional rule engines and rule engine processes, in which typically no losing object of any conflict pair is present in a final list of non-conflicting items derived from processing plural conflict pairs. That is, conventional conflict resolving processes for conflicts defined using pair-wise relationships adopt a singleton result approach based on rule identification labels, i.e. only one winning rule is determined for a given set of circumstances.

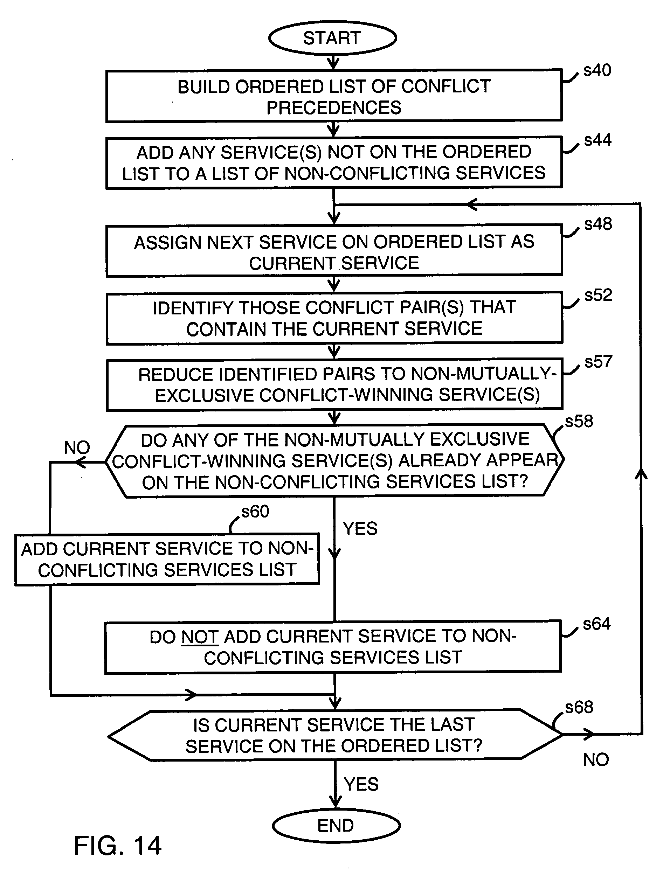

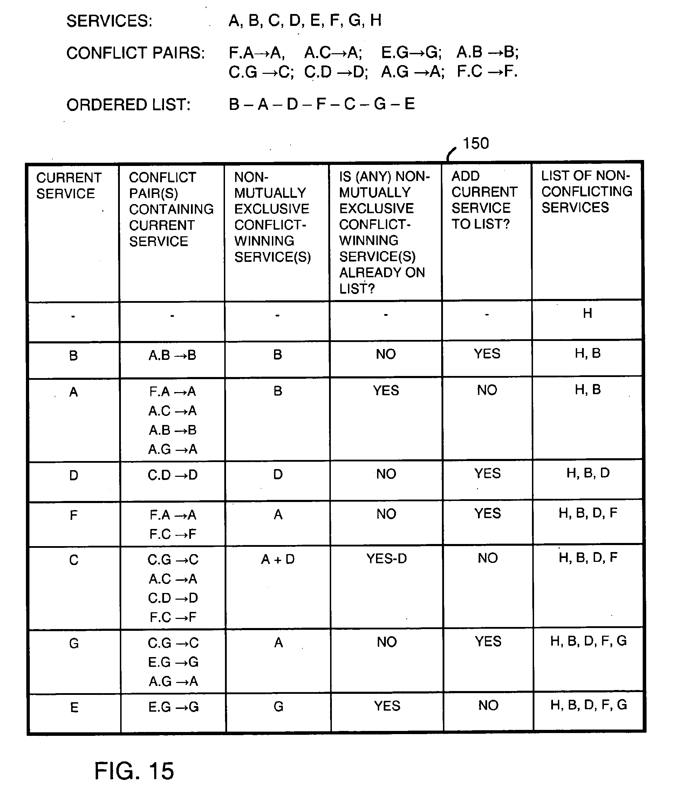

A second embodiment of the conflict handling module 36 will now be described with reference to Figures 14 and 15. Figure 14 is a flowchart showing certain process steps carried out by the conflict handling module 36 in this second embodiment. Many of the process steps are the same as those in the above described first embodiment of the conflict handling module 36 as described above with reference to Figure 12, and so the same steps are indicated by the same reference numerals. Figure 15 is a schematic illustration of how the conflict-resolved results are arrived at during the process shown in Figure 14.

In overview, the process of this second embodiment is the same as that of the above described first embodiment, except that step s56 of the first embodiment, in which it is determined whether any of the services in the conflicting pair (s) identified in previous step s52 already appear on the non-conflicting services list, is replaced in this second embodiment by new steps s57 and s58 (described in more detail below) which together provide the same outcome in this second embodiment as step s56 does in the first embodiment.

We will describe the present second embodiment using the same example of services and conflict pairs as was used in the description of the first embodiment, i.e. we again assume that eight services are required to be processed, labelled for convenience as services A, B, C, D, E, F, G, H (these are shown in Figure 15 for ease of reference).

Let us again further assume that the following conflict pairs exist for these services:

$$\text{F.A} \rightarrow \text{A}; \;\; \text{A.C} \rightarrow \text{A}; \;\; \text{E.G} \rightarrow \text{G}; \;\; \text{A.B} \rightarrow \text{B}; \;\; \text{C.G} \rightarrow \text{C}; \;\; \text{C.D} \rightarrow \text{D}; \;\; \text{A.G} \rightarrow \text{A}; \;\; \text{F.C} \rightarrow \text{F}.$$

These conflict pairs are also shown in Figure 15 for ease of reference.

At step s40, the conflict handling module 36 builds an ordered list of conflict precedences. The ordered list lists the services in an overall order that is internally consistent with all the conflict pairs. Again, in this embodiment, the ordered list does not include any of the services that have no conflict (i.e. any service that does not appear in at least one of the conflict pairs - in this example service H). Again, any suitable algorithm can be employed for deriving the ordered list. In this example the resulting ordered list is again B-A-D-F-C-G-E, where service B can be said to be at the top of the list, i.e. in first position, service A in the next position, i.e. in second position, and so on down to service E which is at the bottom of the list, i.e. in seventh and last position. The ordered list B-A-D-F-C-G-E built at step s40 is shown for ease of reference in Figure 13.

Further steps in the process will now be described. In the following steps, it is again determined which services may be added to a list of non-conflicting services. In this embodiment, firstly any services not on the ordered list are added to the list of non-conflicting services. Thereafter, determination of which of the services on the ordered list may be added to the list of non-conflicting services is again performed by processing each service on the ordered list sequentially, and in the order in which the respective services appear on the ordered list. The final version of the non-conflicting services list represents a group of services that may all be invoked or run together without conflict, i.e. without contravening any of the conflict pairs listed above.

For ease of reference, Figure 15 shows an ongoing outcomes table 150, which shows (moving down the table 150) how the results as to which services are to be added to the non-conflicting services list develop. The ongoing outcomes table 150 has six columns, which represent, working from left to right across the page, the service currently being processed (termed the "current service"); any conflict pair(s) containing the current service; non-mutually-exclusive conflict winning service(s) derived from the conflict pair(s) containing the current service of the previous column; whether any of the non-mutually-exclusive conflict winning service(s) of the previous column are already on the non-conflicting services list; whether therefore the current service is to be added to the non-conflicting services list; and in the final column, the non-conflicting services list as updated due to the processing of the current service of that row.

In more detail, at step s44 the conflict handling module 36 adds any of the services not on the ordered list to the list of non-conflicting services. In this example, service H is therefore added to the non-conflicting services list. In Figure 15, the first row of the ongoing outcome table 150 represents the effect of this step. None of the columns are in fact relevant for this particular step except the last column showing the updated non-conflicting services list which now has just service H added to it.

At step s48, the next service on the ordered list is assigned as the "current service". At this stage, none of the services on the ordered list have yet been assigned and processed as the current service, hence at this stage the next service on the list is the first service on the ordered list, namely service B (which is therefore shown in the current service column of the second row of the ongoing outcome table 150).

At step s52, those conflict pairs that contain the current service as one of the services of the pair are identified. In this example, for current service B, only the conflict pair A.B comprises service B, hence this is the only identified pair; as listed in the second column of the ongoing outcome table 150.

At step s57 the identified conflict pairs, i.e. the conflict pairs identified in previous step s52, are reduced to a list of one or more non-mutually-exclusive conflict-winning services. In the present instance where there is only one conflict pair identified, namely A.B→B, the winner of that pair, namely service B, is the (only) non-mutually-exclusive conflict-winning service, as indicated in the third column of the ongoing outcomes table 150.

At step s58, it is determined whether any of the non-mutually-exclusive conflict-winning service(s) identified in previous step s57 already appear on the non-conflicting services list. In this example, for current service B, since the only non-mutually-exclusive conflict-winning service(s) identified in previous step s57 is service B, and this service B services is not already on the non-conflicting services list, the answer to the determination step is "No", as indicated in the fourth column of the ongoing outcome table 150. (In fact, the answer is bound to be "No" for this processing of the first service on the ordered list as the current service; however this will not be the case when steps s57 and s58 are repeated for other current services later in the process as progress is made down the ordered list.) Moreover, for each following current service, whenever one of the non-mutually-exclusive conflict-winning service(s) identified in previous step s57 is the current service, it will always be the case that the current service will not already be on the non-conflicting services list, since it cannot be added until it has its turn as the current service. Therefore, at step s58 it suffices to determine only whether any of the non-mutually-exclusive conflict-winning service(s) other than the current service are already on the non-conflicting pairs list. Nevertheless, depending on the details of the algorithm employed, it may be convenient or efficient in terms of programming or implementation of the algorithm, as in this embodiment, to include determining whether the current service is already on the non-conflicting pairs list even though the result will always be that it is not.

When the outcome of determining step s58 is "No", i.e. when none of the non-mutually-exclusive conflict-winning service(s) identified in previous step s57 already appear on the non-conflicting services list, then the process moves to step s60. At step s60, the current service is added to the non-conflicting services list. In other words, whenever (at step s58) it is determined that none of the non-mutually-exclusive conflict-winning service(s) identified in previous step s57 already appear on the non-conflicting services list, then the current service is added to the non-conflicting services list. This is the case in the present example for current service B, hence here service B is to be added to the non-conflicting services list (as indicated by the entry in the fifth column of the ongoing outcome table 150). Since the non-conflicting services list already previously contained service H, then at the end of this processing of service B as the current service, i.e. once the current service is added to the non-conflicting services list, the non-conflicting services list now contains services H and B, as indicated in the sixth and final column of the ongoing outcome table 150.

The above process from step s48 is repeated for each service on the ordered list in turn, in the order the services appear on the ordered list, until all the services on the ordered list have been processed. This repetition is implemented by virtue of step s68 at which it is determined whether the current service is the last service on the ordered list. If the current service were the last service on the ordered list, then the process would be completed. However, when for any current service that current service is not the last on the ordered list, then, as at this stage of the present example, the process indeed returns to step s48. Steps s48-s68 are then repeated with the next service on the ordered list, in this case service A, assigned (at step s48) and processed as the current service (and forming the next row in the ongoing outcome table 150).

In the present example, for service A being processed as the current service, the conflicting pair(s) containing the current service identified at step s52 are F.A→A; A.C→A; AB→B; A.G→A; as shown in the second column of the ongoing outcome table 150 for the row with current service A.

Then, for this case, at step s57 the conflict pairs identified in previous step s52 are reduced to a list of one or more non-mutually-exclusive conflict-winning services. In the present instance this comprises just service B. This is because each of F.A→A; A.C→A; and A.G→A provide an outcome of service A, and A.B→B provides an outcome of service B. Thus, services A and B are intermediately potential non-mutually-exclusive services. However, consideration of the pair made up of A and B shows this is itself a conflicting pair of the form A.B→B, i.e. not a non-mutually-exclusive pair, and hence they in turn are resolved to provide the winner of their conflict, i.e. service B, as the final (and only) non-mutually-exclusive conflict-winning service for the processing of current service A.

Then, for this case, at step s58 it is determined that the non-mutually-exclusive conflict-winning service(s) identified in previous step s57, namely B, does already appear on the non-conflicting services list. Hence, as indicated in the fifth column of the ongoing outcome table 150, the current service (i.e. service A) is <u>not</u> added to the non-conflicting services list. Thus, the contents of the non-conflicting services list remains as services H and B, as indicated in the sixth column of the ongoing outcome table 150. This process is schematically represented in the process flowchart of Figure 12, for emphasis, as a discrete step s64 defined as "do not add current service to the non-conflicting services list". However it will be appreciated that this in fact represents no change, hence s64 may equivalently be omitted with no difference to the outcome.

Thereafter, the process moves to step s68 and is consequently again returned to step s48 to begin processing of the next service (service D) on the ordered list as the current service. Following the procedures described above provides, for service D as the current service, as shown in the next row of the ongoing outcome table 150, that the identified conflict pair(s) comprising the current service is C.D→D, that the (only) non-mutually-exclusive conflict-winning service for the processing of current service D is D itself, that service D is not already on the non-conflicting services list, and that consequently the current service D is to be added to the non-conflicting services list, which consequently updates to contain services H, B and D.

Then the next service on the ordered list, namely service F, is processed as the current service, for which (again referring to the appropriate row of the ongoing outcome table 150) the identified conflict pair(s) comprising the current service are F.A→A and F.C→F, from which the (only) non-mutually-exclusive conflict-winning service for the processing of current service F is service A, and service A is not already on the non-conflicting services list, and consequently the current service F is to be added to the non-conflicting services list, which consequently updates to contain services H, B, D and F.

Then the next service on the ordered list, namely service C, is processed as the current service, for which (again referring to the appropriate row of the ongoing outcome table 150) the identified conflict pair(s) comprising the current service are C.G→C, A.C→A, C.D→D and F.C→F. These conflicting pairs resolve to two non-mutually-exclusive conflict-winning services, namely service A and service D. This is because the identified conflict pairs consisting of C.G→C, A.C→A, C.D→D and F.C→F at a first resolving stage therefore provide winning services C, A, D and F respectively. Then, by performing a further iteration based on these four winning services (i.e. identifying conflict pairs containing any combinations of two of them), the following conflict pairs result: A.C→A, C.D→D, F.C→F and F.A→A. Thus services A, D and F remain as winning services at this iteration stage. Then, by performing a yet another iteration, this time based on these three winning services (i.e. identifying conflict pairs containing any combinations of two of them), the conflict pair F.A→A occurs giving the result of service A, and meanwhile the service D can remain as it has no conflict pair with either service A or service F. Thus the final non-mutually-exclusive conflict-winning services are in this instance services A and D. Of these, at least one, namely service D, is already on the non-conflicting services list, and consequently the current service C is not to be added to the non-conflicting services list, which consequently remains in the state of containing services H, B, D and F.

Then the next service on the ordered list, namely service G, is processed as the current service, for which (again referring to the appropriate row of the ongoing outcome table 150) the identified conflict pair(s) comprising the current service are C.G→C, E.G→G and A.G→A. These conflicting pairs resolve to a single non-mutually-exclusive conflict-winning service, namely service A. This is because the identified conflict pairs consisting of C.G→C, E.G→G and A.G→A at a first resolving stage therefore provide winning services C, G and A respectively. Then, by performing a further iteration based on these three winning services (i.e. identifying conflict pairs containing any combinations of two of them), the following conflict pairs result: C.G→C, C.A→A and G.A→A. Thus services C and A remain as winning services at this iteration stage. Then, by performing a yet another iteration, this time based on these two winning services, the conflict pair C.A→A formed by them occurs giving the single result of service A. Thus the final non-mutually-exclusive conflict-winning service in this instance is service A. Service A is not already on the non-conflicting services list, and consequently the current service G is to be added to the non-conflicting services list, which consequently updates to contain services H, B, D, F and G.

Then the next service on the ordered list, namely service E, is processed as the current service, for which (again referring to the appropriate row of the ongoing outcome table 150) the only identified conflict pair(s) comprising the current service is E.G→G. Thus the winner of this conflict, namely service G, is the (only) non-mutually-exclusive conflict-winning service in this instance. This service G is already on the non-conflicting services list, and consequently the current service E is not to be added to the non-conflicting services list, which consequently remains in the state of containing services H, B, D, F and G.

Since service E is the last, i.e. bottom, service on the ordered list, step s68 results in the process ending. Thus the present state of the non-conflicting services list is the final outcome of that list. That is, in this example applied to the process of this embodiment, the final list of non-conflicting services contains services H, B, D, F and G.

Thus, this second embodiment of the conflict handling process provides the same list of non-conflicting services as the above described first embodiment, with the same advantages as were described above for the first embodiment of the conflict handling process.

The reason that the second embodiment of the conflict handling process provides the same list of non-conflicting services as the above described first embodiment is that in the second embodiment steps s57 and s58 in combination have the same effect and the same outcomes as step s56 has in the first embodiment. In more detail, certain services that need to be compared in the first embodiment with the present contents of the list of non-conflicting services at step s56 do not need to be compared in the second embodiment with the present contents of the list of non-conflicting services at step s58, since in the second embodiment previous step s57 has eliminated some of the services contained in the conflict pairs identified at step s52. However, this does not change the outcome in the first embodiment, because none the services eliminated at step s57 in the second embodiment ever produce an addition to the non-conflicting services list in the first embodiment, because such services are always inherently lower down the ordered list than the current service, hence cannot yet have had their turn as the current service, and therefore cannot already have been added to the non-conflicting services list.

Thus it will be appreciated that in yet further embodiments of the conflict handling process, step s56 of the first embodiment and steps s52 and s57 of the second embodiment may be replaced by any appropriate process step or steps that are derived from this understanding and/or provide this effect/outcome.

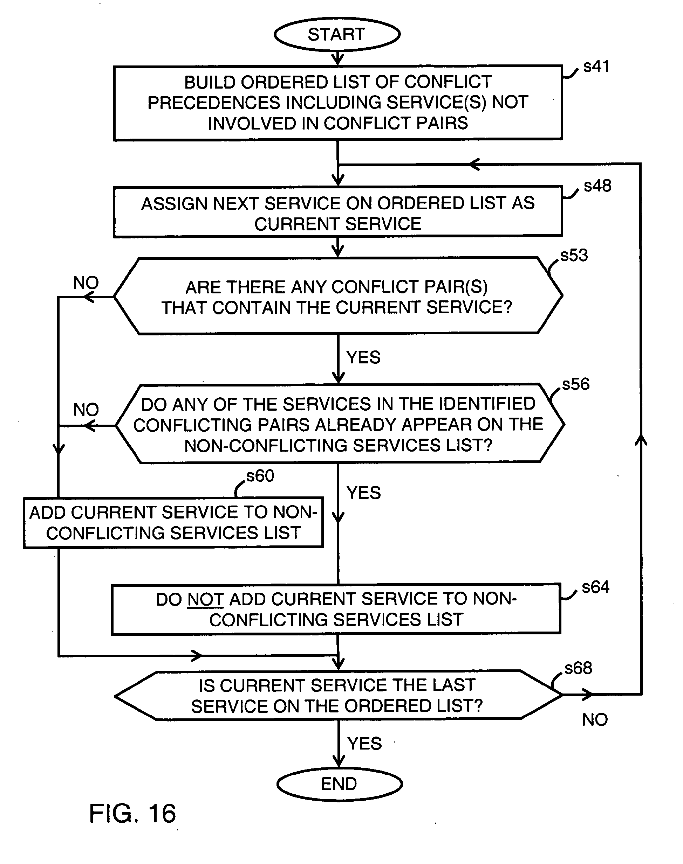

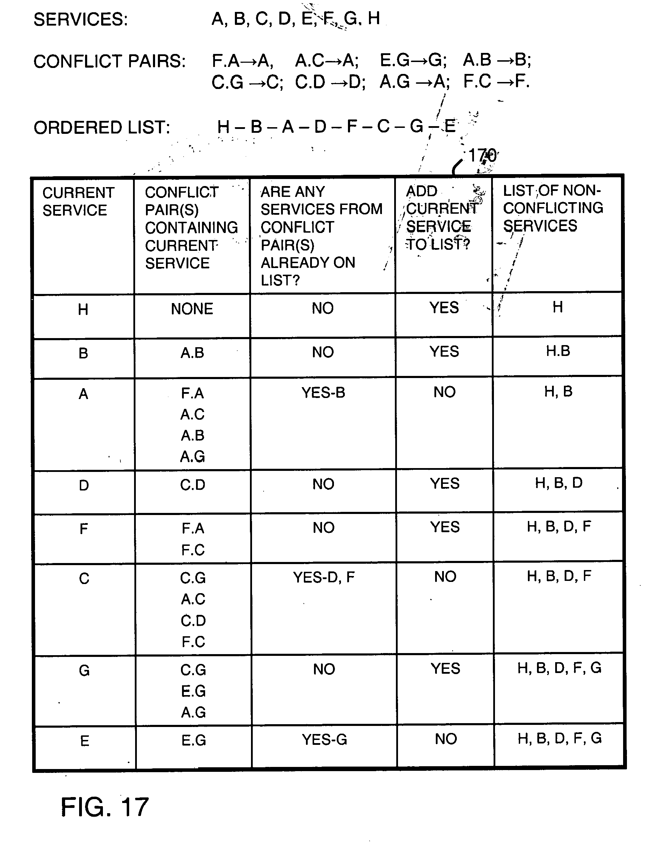

A third embodiment of the conflict handling module 36 will now be described with reference to Figures 16 and 17. Figure 16 is a flowchart showing certain process steps carried out by the conflict handling module 36 in this third embodiment. Many of the process steps are the same as those in the above described first embodiment of the conflict handling module 36 as described above with reference to Figure 12, and so the same steps are indicated by the same reference numerals. Figure 17 is a schematic illustration of how the conflict-resolved results are arrived at during the process shown in Figure 16.

In overview, the process of this third embodiment is the same as that of the above described first embodiment, except that the ordered list in this third embodiment includes also those service(s) that do not appear in the conflict pairs, i.e. step s40 of the first embodiment is replaced with a modified version of this step, namely a new step s41, in this third embodiment. This leads to certain other changes in detail in the process, which will be described below.

The present third embodiment will now be described using the same example of services and conflict pairs as was used in the description of the first embodiment, i.e. we again assume that eight services are required to be processed, labelled for convenience as services A, B, C, D, E, F, G, H (these are shown in Figure 17 for ease of reference).

Let us again further assume that the following conflict pairs exist for these services:

$$F.A \rightarrow A; \ A.C \rightarrow A; \ E.G \rightarrow G; \ A.B \rightarrow B; \ C.G \rightarrow C; \ C.D \rightarrow D; \ A.G \rightarrow A; \ F.C \rightarrow F.$$

These conflict pairs are also shown in Figure 17 for ease of reference.

At step s41, the conflict handling module 36 builds an ordered list of conflict precedences of all the services, i.e. including any service(s) that are not on involved in any of the conflict pairs. Thus in this example service H is included in the ordered list. The ordered list lists the services in an overall order that is internally consistent with all the conflict pairs. Again, any suitable algorithm can be employed for deriving the ordered list. In this example the resulting ordered list is H-B-A-D-F-C-G-E, where service H can be said to be at the top of the list, i.e. in first position, service B in the next position, i.e. in second position, and so on down to service E which is at the bottom of the list, i.e. in seventh and last position. This ordered list H-B-A-D-F-C-G-E built at step s40 is shown for ease of reference in Figure 13. Note, although in this example service H has been placed at the top of the ordered list, because it does not have any conflict, it could instead have been be placed anywhere in the ordered list. As with the earlier explanation as to how different ordered lists may be derivable for a given example but provide the same end result, in the case of different ordered lists derivable by virtue of services such as H in this embodiment being added also provide the same end outcome of the overall process.

Further steps in the process will now be described. In the following steps, it is determined which services may be added to a list of non-conflicting services. In this embodiment, determination of which of the services on the ordered list may be added to the list of non-conflicting services is performed by processing each service on the ordered list sequentially, and in the order in which the respective services appear on the ordered list. The final version of the non-conflicting services list represents a group of services that may all be invoked or run together without conflict, i.e. without contravening any of the conflict pairs listed above.

For ease of reference, Figure 17 shows an ongoing outcomes table 170, which shows (moving down the table 170) how the results as to which services are to be added to the non-conflicting services list develop. The ongoing outcomes table 170 has five columns, which represent, working from left to right across the page, the service currently being processed (termed the "current service"); any conflict pair(s) containing the current service; whether any of the services in the conflicting pair(s) are already on the non-conflicting services list; whether therefore the current service is to be added to the non-conflicting services list; and in the final column, the non-conflicting services list as updated due to the processing of the current service of that row.

In this third embodiment, the inclusion of non-conflict services on the ordered list means that step s44 of the first embodiment is not carried out, and instead in this third embodiment, as shown in Figure 16, the process now moves to step s48.

At step s48, the next service on the ordered list is assigned as the "current service". At this stage, none of the services on the ordered list have yet been assigned and processed as the current service, hence at this stage the next service on the list is the first service on the ordered list, namely service H (which is therefore shown in the current service column of the first row of the ongoing outcome table 170).

In this third embodiment, because of the inclusion of non-conflict services on the ordered list, when the current service is such a service, there are no conflict pairs identifiable that contain the current service. Therefore, in this third embodiment, process step s52 of the first embodiment is replaced with a new step s53 that not only identifies any conflict pairs containing the current service, but also determines whether any such pairs exist at all for the current service. At step s53, in this example, for current service H, there is no such conflict pair. Hence the answer to the determination step s53 is "No", and hence the process moves to step s60. Note this is indicated in Figure 17 by the entry "None" in the second column of the first row of the ongoing outcome table 170, and the entry "No" in the third column of the first row of the ongoing outcome table 170.

At step s60, therefore, service H is therefore added to the non-conflicting services list.

The above process from step s48 is repeated for each service on the ordered list in turn, in the order the services appear on the ordered list, until all the services on the ordered list have been processed. This repetition is implemented by virtue of step s68 at which it is determined whether the current service is the last service on the ordered list. If the current service were the last service on the ordered list, then the process would be completed. However, when for any current service that current service is not the last on the ordered list, then, as at this stage of the present example, the process indeed returns to step s48. Steps s48-s68 are then repeated with the next service on the ordered list, in this case service A, assigned (at step s48) and processed as the current service (and forming the next row in the ongoing outcome table 170).

In more detail, at step s48, the next service on the ordered list is assigned as the "current service", namely service B (which is therefore shown in the current service column of the second row of the ongoing outcome table 170).

At step s53, it is determined that there is a conflict pair that contains the current service B, and this is the conflict pair A.B, as listed in the second column of the ongoing outcome table 170.

At step s56, it is determined whether any of the services in the conflicting pair(s) identified in previous step s52 already appear on the non-conflicting services list. In this example, for current service B, since the identified conflicting pair(s) comprise services A and B, and neither of these services is already on the non-conflicting services list, the answer to the determination step is "No", as indicated in the third column of the ongoing.

When the outcome of determining step s56 is "No", i.e. when none of the services in the conflicting pair(s) identified in previous step s52 already appear on the non-conflicting services list, then the process moves to step s60. At step s60, the current service is added to the non-conflicting services list. In other words, whenever (at step s56) it is determined that none of the services in the conflicting pair(s) identified in previous step s52 already appear on the non-conflicting services list, then the current service is added to the non-conflicting services list. This is the case in the present example for current service B, hence here service B is to be added to the non-conflicting services list (as indicated by the entry in the fourth column of the ongoing outcome table 170). Since the non-conflicting services list already previously contained service H, then at the end of this processing of service B as the current service, i.e. once the current service is added to the non-conflicting services list, the non-conflicting services list now contains services H and B, as indicated in the fifth and final column of the ongoing outcome table 170.

Thereafter the process is repeated taking each of services A, D, F, C, G and E in turn as the current service, and this is the same from this point as that of the first embodiment shown in Figure 12, and the remainder of the ongoing outcome table 170 builds up in the same way with as the remainder of the ongoing outcome table 130 of Figure 13. Ultimately, the same result of the non-conflicting list finally containing the services H, B, D, F and G is arrived at.

The above described third embodiment provides a potential advantage in certain circumstances of providing a processing flow that is the same for each of the services, i.e. does not require the non-conflict services such as service H in the above example to be processed separately. However, in other circumstances, it may be more desirable to process them separately, as is done in the first embodiment, so as to avoid unnecessary repetition of processing steps.

More generally, it will be appreciated that in yet further embodiments of the conflict handling process, the particular steps s40 and s44 of the first embodiment, and step s41 of the third embodiment, may be replaced by any appropriate process step or steps that are derived from this understanding and/or provide this effect/outcome. Even when performing the same steps as in the above embodiments, the order of certain steps can be changed. For example, in the first embodiment, step s44 (adding services not on the ordered list to the list of non-conflicting services) may be performed after the services on the ordered list have been processed.

In the above examples of the network services brokering process, the process is initiated by a request coming into the network services broker 4 (e.g. from the service provider 6) requesting context dependent services for a given user, and specifying an invite or trigger event. The request may also contain an originating user (e.g. user 8) and/or application. The request may be originated by the user, the service provider, or by any other applicable party. For example, the request may be sent to the network services broker from a third party instructed by the user to choose services from given service providers, or even to arrange services from service providers not directly known by the user. Moreover, the request may be in various forms. For example, the invite or trigger invite may be in one of a range of forms known by the network services broker, with such forms being different for different users or different service providers.

In the above examples, the brokering process is completed by the context dependent services being invoked, e.g. the list or definition of services to be invoked being output from the network services broker and sent to the user system and/or the service provider. Thereafter, the services may be provided or run in any way appropriate to the user system and service provider involved. Moreover, in other examples, there are other ways in which the brokering process can be completed. For example, the network services provider may send instructions that effectively tale a role in the running of the service.

It should be noted that certain of the process steps depicted in the flowcharts of Figures 4 and 5 described above may be omitted or such process steps may be performed in differing order to that presented above and shown in the Figures. Furthermore, although all the process steps have, for convenience and ease of understanding, been depicted as discrete temporally-sequential steps, nevertheless some of the process steps may in fact be performed simultaneously or at least overlapping to some extent temporally. For example, part or all of step s8 of Figure 4 and step s26 of Figure 5 may be performed earlier in the process, for example even before the incoming service request is received. In such a case, the user-defined service selection rules and/or the user-defined precedence rules are evaluated by the conflict handling module for conflicts before incoming requests are received. Often however this would unduly restrain the user during the process of defining his rules. The network services broker may optionally inform the user of any conflicting rules found. This may be done also when the conflict resolution is implemented during the process at step s8 or step s26 as in the above examples.

The particular services described in the above examples are given by way of example only. The services may include any provided over communications networks, including for example multimedia content, interactive games playing, message services such as SMS text messages, voicemail, email, telephone calls, home automation communications and instructions, and receiving streamed media content such as television programmes and movies.

It will be appreciated that the base functions and context details described in the above examples are given by way of example only, and in other examples other combinations of the above described base functions and context, and also individual base functions and contexts different to those described above, may be employed.

Also, it will be appreciated that the context module may access any one or more of a number of data sources. These may include reusable network capabilities (e.g. location, presence etc) accessed via web services, to obtain base function values for a given user i.e. their current context.

Another possibility is that the rule query module may include or access a set of rules or application logic that restricts the query made to the context module, e.g. for a first given invite, for example a SIP invite, the rule query module requests the user's current location and calendar information, say, whereas for a second given invite, for example a home automation event, the rule query module requests only location. This approach will tend to optimise the size of the query and tend to aid efficient running of the network services broker.

In the above examples, including the embodiments of the conflict handling module, the various rules are stored in XML documents and/or native XML databases, and querying of the rules is performed using XQuery procedures. Another possibility instead of using native XML databases is to use a database that has an XML capability (storing XML documents and XQuery front end).

For any of the above mentioned XML documents and databases, including native XML databases, another possibility for carrying out the querying process is to use XSL. If XSL is used, a stylesheet is generated at runtime, or variables may be passed to an XSLT processor. Yet further, in other examples, including embodiments of the conflict handler module, other databases, including other tagged or mark-up language databases, may be used instead of XML, and any appropriate querying processes may be used in conjunction therewith.

The conflict handling modules of the above embodiments as described above with reference to Figures 12 and 17, or Figures 14 and 15, or Figures 16 and 17, tend to allow the provision of multiple non-conflicting rules to be returned based on pair-wise conflict relationships. This is particularly advantageous when used in the network services broker described above, as this allows a tendency for optimisation of the particular way in which conflicts remain after the user-defined precedence rules have been implemented. Nevertheless, the conflict handling modules described above may be used advantageously in other environments, and for objects other than services.

The functionality of the network services broker, and in particular the conflict handler module, described in the above examples and embodiments may be arranged in different functional modules, and with other arrangements, to the examples described above. For example, the rules may be stored at a different entity to where one or more of the functional modules of the controller, e.g. the conflict handler module, are implemented. Moreover, each individual functional module may be provided by different physical elements distributed in different locations. As such, the various process steps described in the embodiments above may be carried out by various components distributed at different locations or entities within any suitable network or system, including the various steps of the embodiments of the conflict handling processes described above with reference to Figures 12, 14 and 16. Generally, the modules may each consist of a single discrete entity added to a conventional apparatus or system, or may alternatively be formed by adapting existing parts of a conventional apparatus or system, for example by reprogramming of one or more processors in a conventional apparatus or system. As such individual modules, including for example the conflict handler module, and/or the controller and or the network services broker may be implemented in the form of processor-implementable instructions stored on a storage medium, such as a floppy disk, hard disk, PROM, RAM or any combination of these or other storage media. Furthermore, whether a separate entity or an adaptation of existing parts or a combination of these, the module may be implemented in the form of hardware, firmware, software, or any combination of these. In the above examples, the network services broker is separate from the service provider. However, in other examples, the network service broker may be located functionally and/or physically at the service provider of one or more of the services being brokered.

In the above embodiments of the conflict handler, the conflict handler is part of a network services broker, and the objects handled or resolved by the conflict handler are services. However, the conflict handler may be embodied in other environments and for handling or resolving types of objects other than communications services. As such, the conflict handler may be employed to handle or resolve any form of objects where some of a plurality of the objects are mutually exclusive in a pair-wise manner where one object in a pair of mutually exclusive objects has precedence over the other object in the mutually exclusive pair of objects.

As an example, the objects may be rules or other components in a rules engine, for example an inferencing rules engine.

As another example, the objects may be physical components that may be selected for addition to a core item, to build up the core item into a finished item, for example an automobile or a computer, for example on an automated production line. The components (objects) may be selected according to user or purchaser choice, possibly from a list of possibilities, but there may be pair-wise mutually exclusive objects, e.g. in the case of an automobile, convertible roof and roof-rack; or in the case of a computer, CD-rewriter and DVD player.

As another example, the objects may be various discounts offered by an online retailer, but where the online retailer specifies that certain discounts are mutually exclusive.

As such it will be appreciated that the objects may be physical objects or programming objects.

**Claims**

1. A conflict handler for selecting a plurality of non-conflicting objects from a plurality of objects at least some of which define conflict-pairs of mutually exclusive objects wherein for each conflict pair one of the objects in the pair takes precedence over the other object of the pair; the conflict handler comprising means for performing the following steps:

(i) building an ordered list of conflict precedences comprising at least those objects that occur in one or more conflict pairs, wherein the ordered list of conflict precedences lists all the objects in the ordered list in a precedence order that is internally consistent with the precedence relationships within the conflict pairs;
the means being arranged to perform the following steps (ii) to (vi) in the following order:
(ii) assigning the next object on the ordered list as a current object;
(iii) identifying any conflict pair or pairs that contain the current object;
(iv) determining whether any of the objects in the identified conflicting pairs have already been selected as one of the plurality of non-conflicting objects;
(v-a) if the result of the determining step (iv) is that none of the objects in the identified conflicting pairs have already been selected as one of the plurality of non-conflicting objects or if at step (iii) no conflict pairs containing the current object were identified, then adding the current object to the plurality of non-conflicting objects; or
(v-b) whereas if the result of the determining step (iv) is that one or more of the objects in the identified conflicting pairs have already been selected as one of the plurality of non-conflicting objects, then not adding the current object to the plurality of non-conflicting objects;
(vi) repeating steps (ii) to (v) until all the objects have been processed in turn as a respective current object; and
(vii) adding any of the plurality of objects that were not included in the ordered list to the plurality of non-conflicting objects;

wherein the resulting plurality of non-conflicting objects is the selected plurality of non-conflicting objects.

2. A conflict handler according to claim 1, wherein the means for selecting a plurality of non-conflicting objects is arranged to perform step (vii) before step (i).

3. A conflict handler according to claim 1, wherein the means for selecting a plurality of non-conflicting objects is arranged to perform step (vii) after step (i) and before steps (ii) to (vi).

4. A conflict handler according to claim 1, wherein the means for selecting a plurality of non-conflicting objects is arranged such that at step (i) all the objects of the plurality of objects are added to the ordered list, and thereby no objects need to be added at step (vii) which is therefore not implemented.

5. A conflict handler according to any of claims 1 to 4, wherein the means for selecting a plurality of non-conflicting objects is arranged such that step (iv) is performed by performing the following steps:

(iv-a) reducing the identified conflict pairs to one or more non-mutually-exclusive conflict-winning objects; and
(iv-b) determining whether any of the non-mutually-exclusive conflict-winning objects have already been selected as one of the plurality of non-conflicting objects.

6. A conflict handler according to any of claims 1 to 5, wherein the conflict handler comprises a mark-up language query processor for querying the objects stored in a mark-up language document or database.

7. A conflict handler according to claim 6, wherein the mark-up language is Extensible Markup Language, XML, and the mark-up language query processor is an XQuery processor.

8. A conflict handler according to any of claims 1 to 7, wherein the objects are communications services.

9. A conflict handler according to claim 8, wherein the communications services are brokered in a network services broker.

**10.** A conflict handling method for selecting a plurality of non-conflicting objects from a plurality of objects at least some of which define conflict-pairs of mutually exclusive objects wherein for each conflict pair one of the objects in the pair takes precedence over the other object of the pair; the method comprising the following steps:

> (i) building an ordered list of conflict precedences comprising at least those objects that occur in one or more conflict pairs, wherein the ordered list of conflict precedences lists all the objects in the ordered list in a precedence order that is internally consistent with the precedence relationships within the conflict pairs;
> performing the following steps (ii) to (vi) in the following order:
> (ii) assigning the next object on the ordered list as a current object;
> (iii) identifying any conflict pair or pairs that contain the current object;
> (iv) determining whether any of the objects in the identified conflicting pairs have already been selected as one of the plurality of non-conflicting objects;
> (v-a) if the result of the determining step (iv) is that none of the objects in the identified conflicting pairs have already been selected as one of the plurality of non-conflicting objects or if at step (iii) no conflict pairs containing the current object were identified, then adding the current object to the plurality of non-conflicting objects; or
> (v-b) whereas if the result of the determining step (iv) is that one or more of the objects in the identified conflicting pairs have already been selected as one of the plurality of non-conflicting objects, then not adding the current object to the plurality of non-conflicting objects;
> (vi) repeating steps (ii) to (v) until all the objects have been processed in turn as a respective current object; and
> (vii) adding any of the plurality of objects that were not included in the ordered list to the plurality of non-conflicting objects;

> wherein the resulting plurality of non-conflicting objects is the selected plurality of non-conflicting objects.

**11.** A method according to claim 10, wherein step (vii) is performed before step (i).

**12.** A method according to claim 10, wherein step (vii) is performed after step (i) and before steps (ii) to (vi).

**13.** A method according to claim 10, wherein at step (i) all the objects of the plurality of objects are added to the ordered list, and thereby no objects need to be added at step (vii) which is therefore not implemented.

**14.** A method according to any of claims 10 to 13, wherein step (iv) is performed by performing the following steps:

> (iv-a) reducing the identified conflict pairs to one or more non-mutually-exclusive conflict-winning objects; and
> (iv-b) determining whether any of the non-mutually-exclusive conflict-winning objects have already been selected as one of the plurality of non-conflicting objects.

**15.** A method according to any of claims 10 to 14, further comprising using a mark-up language query processor for querying the objects stored in a mark-up language document or database.

**16.** A method according to claim 15, wherein the mark-up language is Extensible Markup Language, XML, and the mark-up language query processor is an XQuery processor.

**17.** A method according to any of claims 10 to 16, wherein the objects are communications services.

**18.** A method according to claim 17, wherein the communications services are brokered in a network services broker.

**19.** A storage medium storing processor-implementable instructions for controlling one or more processors to carry out the method of any of claims 10 to 18.

FIG. 1

FIG. 2

FIG. 3

START

OBTAIN USER CONTEXT DATA — s2

IDENTIFY RELEVANT SERVICE SELECTION RULES — s4

IMPLEMENT USER SERVICE PRECEDENCE — s6

RESOLVE CONFLICTS — s8

INVOKE CONTEXT-DEPENDENT SERVICES — s10

END

FIG. 4

FIG. 5

61

rule type

attributes
[label]

62

60

rule

64

body

66

head

68

overriddenBy

FIG. 6

FIG. 7

71

81

baseFunctionAttributeGroup
[constraint]

82

servicesAttributeGroup
[additionalString]

FIG. 8

73

baseFunctionAttributeGroup
[constraint]
91

servicesAttributeGroup
[additionalString]
92

FIG. 9

75

101

baseFunctionAttributeGroup
[constraint]

FIG. 10

78

111

baseFunctionAttributeGroup
[constraint]

112

servicesAttributeGroup
[additionalString]

FIG. 11

START

BUILD ORDERED LIST OF CONFLICT PRECEDENCES — s40

ADD ANY SERVICE(S) NOT ON THE ORDERED LIST TO A LIST OF NON-CONFLICTING SERVICES — s44

ASSIGN NEXT SERVICE ON ORDERED LIST AS CURRENT SERVICE — s48

IDENTIFY THOSE CONFLICT PAIR(S) THAT CONTAIN THE CURRENT SERVICE — s52

DO ANY OF THE SERVICES IN THE IDENTIFIED CONFLICTING PAIRS ALREADY APPEAR ON THE NON-CONFLICTING SERVICES LIST? — s56

NO

YES

s60

ADD CURRENT SERVICE TO NON-CONFLICTING SERVICES LIST

DO NOT ADD CURRENT SERVICE TO NON-CONFLICTING SERVICES LIST — s64

IS CURRENT SERVICE THE LAST SERVICE ON THE ORDERED LIST? — s68

NO

YES

END

FIG. 12

SERVICES: A, B, C, D, E, F, G, H

CONFLICT PAIRS: F.A→A, A.C→A; E.G→G; A.B →B;
C.G →C; C.D →D; A.G →A; F.C →F.

ORDERED LIST: B – A – D – F – C – G – E

<sub>130</sub>

| CURRENT SERVICE | CONFLICT PAIR(S) CONTAINING CURRENT SERVICE | ARE ANY SERVICES FROM CONFLICT PAIR(S) ALREADY ON LIST? | ADD CURRENT SERVICE TO LIST? | LIST OF NON-CONFLICTING SERVICES |
|---|---|---|---|---|
| - | - | - | - | H |
| B | A.B | NO | YES | H, B |
| A | F.A A.C A.B A.G | YES-B | NO | H, B |
| D | C.D | NO | YES | H, B, D |
| F | F.A F.C | NO | YES | H, B, D, F |
| C | C.G A.C C.D F.C | YES-D, F | NO | H, B, D, F |
| G | C.G E.G A.G | NO | YES | H, B, D, F, G |
| E | E.G | YES-G | NO | H, B, D, F, G |

## FIG. 13

START

BUILD ORDERED LIST OF CONFLICT PRECEDENCES — s40

ADD ANY SERVICE(S) NOT ON THE ORDERED LIST TO A LIST OF NON-CONFLICTING SERVICES — s44

ASSIGN NEXT SERVICE ON ORDERED LIST AS CURRENT SERVICE — s48

IDENTIFY THOSE CONFLICT PAIR(S) THAT CONTAIN THE CURRENT SERVICE — s52

REDUCE IDENTIFIED PAIRS TO NON-MUTUALLY-EXCLUSIVE CONFLICT-WINNING SERVICE(S) — s57

DO ANY OF THE NON-MUTUALLY EXCLUSIVE CONFLICT-WINNING SERVICE(S) ALREADY APPEAR ON THE NON-CONFLICTING SERVICES LIST? — s58

NO

ADD CURRENT SERVICE TO NON-CONFLICTING SERVICES LIST — s60

YES

DO NOT ADD CURRENT SERVICE TO NON-CONFLICTING SERVICES LIST — s64

IS CURRENT SERVICE THE LAST SERVICE ON THE ORDERED LIST? — s68

NO

YES

END

FIG. 14

SERVICES: A, B, C, D, E, F, G, H

CONFLICT PAIRS: F.A→A, A.C→A; E.G→G; A.B →B; C.G →C; C.D →D; A.G →A; F.C →F.

ORDERED LIST: B – A – D – F – C – G – E

150

| CURRENT SERVICE | CONFLICT PAIR(S) CONTAINING CURRENT SERVICE | NON-MUTUALLY EXCLUSIVE CONFLICT-WINNING SERVICE(S) | IS (ANY) NON-MUTUALLY EXCLUSIVE CONFLICT-WINNING SERVICE(S) ALREADY ON LIST? | ADD CURRENT SERVICE TO LIST? | LIST OF NON-CONFLICTING SERVICES |
|---|---|---|---|---|---|
| - | - | - | - | - | H |
| B | A.B →B | B | NO | YES | H, B |
| A | F.A →A<br>A.C →A<br>A.B →B<br>A.G →A | B | YES | NO | H, B |
| D | C.D →D | D | NO | YES | H, B, D |
| F | F.A →A<br>F.C →F | A | NO | YES | H, B, D, F |
| C | C.G →C<br>A.C →A<br>C.D →D<br>F.C →F | A + D | YES-D | NO | H, B, D, F |
| G | C.G →C<br>E.G →G<br>A.G →A | A | NO | YES | H, B, D, F, G |
| E | E.G →G | G | YES | NO | H, B, D, F, G |

FIG. 15

35

START

BUILD ORDERED LIST OF CONFLICT
PRECEDENCES INCLUDING SERVICE(S) NOT
INVOLVED IN CONFLICT PAIRS
s41

ASSIGN NEXT SERVICE ON ORDERED LIST AS
CURRENT SERVICE
s48

ARE THERE ANY CONFLICT PAIR(S)
THAT CONTAIN THE CURRENT SERVICE?
s53

NO

YES

DO ANY OF THE SERVICES IN THE IDENTIFIED
CONFLICTING PAIRS ALREADY APPEAR ON THE
NON-CONFLICTING SERVICES LIST?
s56

NO

s60
ADD CURRENT SERVICE TO NON-
CONFLICTING SERVICES LIST

YES

DO NOT ADD CURRENT SERVICE TO NON-
CONFLICTING SERVICES LIST
s64

IS CURRENT SERVICE THE LAST
SERVICE ON THE ORDERED LIST?
s68

NO

YES

END

FIG. 16

SERVICES:        A, B, C, D, E, F, G. H

CONFLICT PAIRS:   F.A→A,   A.C→A;   E.G→G;  A.B →B;
                       C.G →C;  C.D →D;  A.G →A;  F.C →F.

ORDERED LIST:     H – B – A – D – F – C – G – E

170

| CURRENT SERVICE | CONFLICT PAIR(S) CONTAINING CURRENT SERVICE | ARE ANY SERVICES FROM CONFLICT PAIR(S) ALREADY ON LIST? | ADD CURRENT SERVICE TO LIST? | LIST OF NON-CONFLICTING SERVICES |
|---|---|---|---|---|
| H | NONE | NO | YES | H |
| B | A.B | NO | YES | H.B |
| A | F.A<br>A.C<br>A.B<br>A.G | YES-B | NO | H, B |
| D | C.D | NO | YES | H, B, D |
| F | F.A<br>F.C | NO | YES | H, B, D, F |
| C | C.G<br>A.C<br>C.D<br>F.C | YES-D, F | NO | H, B, D, F |
| G | C.G<br>E.G<br>A.G | NO | YES | H, B, D, F, G |
| E | E.G | YES-G | NO | H, B, D, F, G |

## FIG. 17

European Patent
Office

**EUROPEAN SEARCH REPORT**

Application Number

EP 06 25 1890

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2003/037151 A1 (MONTVAY ANDRAS ET AL) 20 February 2003 (2003-02-20) * abstract * ----- | 1-19 | INV. G06N5/04 |
| | | | TECHNICAL FIELDS SEARCHED (IPC) H04L G06N |

The present search report has been drawn up for all claims

| Place of search | Date of completion of the search | Examiner |
|---|---|---|
| The Hague | 29 September 2006 | CANOSA ARESTE, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 25 1890

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2006

| Patent document cited in search report | | Publication date | Patent family member(s) | | Publication date |
|---|---|---|---|---|---|
| US 2003037151 | A1 | 20-02-2003 | DE<br>EP<br>JP | 10140149  A1<br>1284553  A2<br>2003203026  A | 27-02-2003<br>19-02-2003<br>18-07-2003 |

EPO FORM P0459

For more details about this annex : see Official Journal of the European Patent Office, No. 12/82